(19) Europäisches Patentamt

European Patent Office

Office européen des brevets

(11) **EP 1 107 894 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **00949137.4**

(22) Anmeldetag: **27.06.2000**

(51) Int Cl.:
*B60T 8/00* (2006.01)     *B60D 1/30* (2006.01)
*B62D 37/00* (2006.01)     *B62D 7/15* (2006.01)
*B62D 6/04* (2006.01)     *B60T 8/32* (2006.01)

(86) Internationale Anmeldenummer:
**PCT/DE2000/002092**

(87) Internationale Veröffentlichungsnummer:
**WO 2001/002228 (11.01.2001 Gazette 2001/02)**

(54) **VERFAHREN UND VORRICHTUNG ZUR ERKENNUNG EINER PENDELBEWEGUNG EINES FAHRZEUGS**

METHOD AND DEVICE FOR IDENTIFYING A ROLLING MOTION IN A VEHICLE

PROCEDE ET DISPOSITIF DE RECONNAISSANCE D'UN MOUVEMENT PENDULAIRE D'UN VEHICULE

(84) Benannte Vertragsstaaten:
**DE FR GB IT NL SE**

(30) Priorität: **30.06.1999 DE 19929830**

(43) Veröffentlichungstag der Anmeldung:
**20.06.2001 Patentblatt 2001/25**

(73) Patentinhaber: **ROBERT BOSCH GMBH**
**70442 Stuttgart (DE)**

(72) Erfinder: **TRAECHTLER, Ansgar**
**D-71254 Ditzingen-Hirschlanden (DE)**

(56) Entgegenhaltungen:
**EP-A- 0 433 858          EP-A- 0 989 049**
**DE-A- 3 439 261          DE-C- 4 127 750**
**GB-A- 2 257 403          JP-A- 10 236 289**
**US-A- 4 254 998**

**Beschreibung**

Stand der Technik

Bei einem Fahrzeug, hierbei kann es sich sowohl um ein Einzelfahrzeug als auch um ein Fahrzeuggespann handeln, welches aus einem Zugfahrzeug und einem Anhänger oder Auflieger oder Deichselanhänger besteht, können bedingt durch Seitenwind oder durch andere Einflüsse, wie beispielsweise Fahrbahnunebenheiten, Schlingerbewegungen bzw. Pendelbewegungen auftreten. Da diese Problematik in einem stärkeren Maße bei Fahrzeuggespannen auftritt und bei solchen weitaus gefährlicher als bei Einzelfahrzeugen ist, wird nachfolgend die erfindungsgemäße Vorrichtung bzw. das erfindungsgemäße Verfahren mit Blick auf Fahrzeuggespanne betrachtet. Dies soll jedoch keine Einschränkung darstellen. Der Einsatz der erfindungsgemäßen Vorrichtung bzw. des erfindungsgemäßen Verfahrens für Einzelfahrzeuge ist ebenso denkbar.

Kommt es bei einem Fahrzeuggespann zu Schlingerbewegungen bzw. zu Pendelbewegungen, so schwingt der Anhänger um seine Hochachse und regt über die Anhängerkupplung auch das Zugfahrzeug zu Schwingungen an. Liegt die Fahrzeuggeschwindigkeit unterhalb einer sogenannten kritischen Geschwindigkeit, so sind die Schwingungen gedämpft. Ist die Fahrzeuggeschwin-digkeit gleich der kritischen Geschwindigkeit, so sind die Schwingungen ungedämpft, liegt die Fahrzeuggeschwindigkeit oberhalb der kritischen Geschwindigkeit, so klingen die Schwingungen auf. Der Wert der kritischen Geschwindigkeit hängt unter anderem von Geometriedaten wie Radstand und Deichsellänge, von der Masse und dem Gierträgheitsmoment des Fahrzeuges und des Anhängers und von den Schräglaufsteifigkeiten der Achsen ab. Dieser Wert bewegt sich bei Fahrzeuggespannen im Pkw-Bereich typischerweise im Bereich von 90 bis 130 Stundenkilometer. Die Frequenz der Schwingbewegung bzw. der Pendelbewegung beträgt ungefähr 0,5 bis 1,5 Hz.

Bei derzeit auf dem Markt befindlichen Fahrdynamikregelungen, wie sie beispielsweise in der in der Automobiltechnischen Zeitschrift (ATZ) 96, 1994, Heft 11, auf den Seiten 674 bis 689 erschienenen Veröffentlichung "FDR - Die Fahrdynamikregelung von Bosch" beschrieben sind, führen die vorstehend beschriebenen Schlingerbewegungen zwar zu Reglereingriffen, da diese Fahrdynamikregelungen jedoch primär für Einzelfahrzeuge (in diesem Fall Personenkraftfahrzeuge) ausgelegt sind und die Regelung der Gierrate des Fahrzeuges im Vordergrund steht, erfolgen die Reglereingriffe in noch nicht optimaler Weise. Vor diesem Hintergrund besteht ein Bedarf, bestehende Fahrdynamikregelungen mit einer Erkennung auszustatten, mit der Pendelbewegungen erkannt werden können. Somit können bei einer vorliegenden Pendelbewegung die für diese Situation am besten geeigneten Reglereingriffe durchgeführt werden.

Somit betrifft die Erfindung ein Verfahren und eine Vorrichtung zur Erkennung einer Pendelbewegung eines Fahrzeuges. Solche Verfahren und Vorrichtungen sind bereits aus dem Stand der Technik in vielerlei Modifikationen bekannt.

So ist beispielsweise ein Verfahren zur Verbesserung der Querstabilität bei Kraftfahrzeugen bekannt, bei dem fahrzeugverzögernde Maßnahmen ergriffen werden, wenn die Amplitude einer querdynamischen, innerhalb eines vorgegebenen Frequenzbandes schwingenden Fahrzeuggröße einen vorgegebenen Grenzwert überschreitet. Hierzu wird ermittelt, ob innerhalb einer vorgegebenen Zeit mehrere aufeinanderfolgende Amplituden der querdynamischen Fahrzeuggröße den ihr zugeordneten Grenzwert überschreiten. Diese Vorgehensweise ist sehr aufwendig und daher kostspielig und somit für den Einsatz im Fahrzeugbereich eher weniger geeignet. Eine Berücksichtigung der Fahrzeuggeschwindigkeit ist nicht vorgesehen.

Ferner ist ein System bekannt, mit dem unter anderem ein Schlingern eines Fahrzeuges erkannt wird, und welches den Fahrer bei einem erkannten Schlingern warnt. Hierzu enthält das Fahrzeug einen Querbeschleunigungssensor. Zur Erkennung des Schlingerns wird die Frequenz und die Amplitude des mit Hilfe des Querbeschleunigungssensors ermittelten Signals beobachtet. Die Frequenz ergibt sich dabei aus dem zeitlichen Abstand aufeinanderfolgender Nulldurchgänge. Auch diese Vorgehensweise ist aufgrund des großen Aufwands eher nicht für den Einsatz im Fahrzeugbereich geeignet Ein Schlingern liegt dann vor, wenn die so ermittelte Frequenz innerhalb eines vorbestimmten Frequenzbandes liegt und wenn die Amplitude größer als ein Schwellenwert ist. Im Zusammenhang mit diesem System wird ferner vorgeschlagen, zusätzlich zu der Querbeschleunigung die Geschwindigkeit und/oder den Lenkwinkel des Fahrzeuges zu betrachten. Allerdings ist eine konkrete Berücksichtigung der Geschwindigkeit bzw. des Lenkwinkels nicht aufgezeigt.

In Dokument GB-A-2 257 403 wird eine Querdynamikgrösse mit einem Schwellenwert verglichen und wird aufgrund dieses Vergleichs entscheiden ob eine Warnung ausgeht.

Ausgehend von diesem bekannten Stand der Technik besteht die Aufgabe der Erfindung darin, ein Verfahren bzw. eine Vorrichtung zur Erkennung einer Pendelbewegung eines Fahrzeuges zu schaffen, welches gegenüber dem Stand der Technik einen einfacheren Aufbau aufweist und darüber hinaus mit einem geringeren Aufwand an Rechenkapazität auskommt.

Diese Aufgabe wird durch die Merkmale des Anspruchs 1 und durch die des Anspruchs 16 gelöst.

An dieser Stelle sei auf das SAE-Paper 973284 "Vehicle Dynamics Control for Commercial Vehicles", in dem in allgemeiner Weise eine für ein Fahrzeuggespann ausgelegte Fahrdynamikregelung beschrieben ist, hingewiesen. Sowohl diese Veröffentlichung als auch die vorstehend genannte "FDR - Die Fahrdynamikregelung von Bosch" sollen hiermit Teil der Offenbarung dieser Schrift sein.

Vorteile der Erfindung

Bei der erfindungsgemäßen Vorrichtung handelt es sich um eine Vorrichtung zur Erkennung einer Pendelbewegung eines Fahrzeuges. Diese Vorrichtung enthält wenigstens ein erstes Ermittlungsmittel, mit dem eine Querdynamikgröße, die die Querdynamik des Fahrzeuges repräsentiert, ermittelt wird. Ferner enthält sie zweite Ermittlungsmittel, mit denen eine Geschwindigkeitsgröße, die die Geschwindigkeit des Fahrzeuges beschreibt, ermittelt wird. In dritten Ermittlungsmitteln wird in Abhängigkeit der wenigstens einen Querdynamikgröße und der Geschwindigkeitsgröße ermittelt, ob eine Pendelbewegung des Fahrzeuges vorliegt. Vorteilhafterweise wird hierzu zumindest überprüft, ob die wenigstens eine Querdynamikgröße größer als ein zugehöriger Schwellenwert und die Geschwindigkeitsgröße größer als ein zugehöriger Schwellenwert ist. Eine Pendelbewegung des Fahrzeuges liegt dann vor, wenn die wenigstens eine Querdynamikgröße größer als der zugehörige Schwellenwert ist, und wenn die Geschwindigkeitsgröße größer als der zugehörige Schwellenwert ist.

Daß zur Erkennung einer Pendelbewegung eine Querdynamikgröße auszuwerten ist, ist anschaulich klar, da die Querdynamikgröße eine Information über diese Bewegung enthält. Die Auswertung der Geschwindigkeitsgröße wird aus folgendem Grund vorgenommen: Wie bereits eingangs erwähnt, hängt der Verlauf der Pendelbewegung in starken Maße davon ab, wie die Geschwindigkeit des Fahrzeuges bzgl. der kritischen Geschwindigkeit liegt. Liegt die Fahrzeuggeschwindigkeit unterhalb der kritischen Geschwindigkeit, so handelt es sich um eine gedämpfte Pendelbewegung, die weniger kritisch als eine ungedämpfte oder gar eine aufklingende Pendelbewegung ist, da diese nach einiger Zeit von selbst beendet ist. D.h. solange die Fahrzeuggeschwindigkeit unterhalb der kritischen Geschwindigkeit ist, ist eine Überwachung bzgl. einer Pendelbewegung nicht unbedingt erforderlich und muß demzufolge auch nicht durchgeführt werden. Folglich wird nicht unnötig Rechenkapazität für eine Überwachung bzw. Erkennung gebunden, die in diesem Fall nicht zwingend erforderlich ist. Um dabei eine gewisse Sicherheitsreserve zu haben, wird der hierfür erforderliche Schwellenwert vorteilhafterweise um einen Sicherheitsabstand kleiner angesetzt als die eigentliche kritische Geschwindigkeit. Dies stellt einen großen Vorteil gegenüber dem bekannten Stand der Technik dar, bei dem ständig die Überwachung bzw. Erkennung, d.h. unabhängig von der Fahrzeuggeschwindigkeit, durchgeführt wird.

Wie eingangs bereits erwähnt, wird die erfindungsgemäße Vorrichtung zur Erkennung einer Pendelbewegung eines Fahrzeuges im Rahmen einer Vorrichtung zur Regelung einer die Fahrdynamik des Fahrzeuges beschreibenden Größe, insbesondere einer die Gierrate des Fahrzeuges beschreibenden Größe, eingesetzt. Wie der vorstehend genannten Veröffentlichung "FDR - Die Fahrdynamikregelung von Bosch" zu entnehmen ist, verfügt solch eine Vorrichtung zur Regelung einer die Fahrdynamik des Fahrzeuges beschreibenden Größe von Haus aus zumindest über einen Querbeschleunigungssensor und einen Gierratensensor, auf die im Rahmen der Erkennung einer Pendelbewegung eines Fahrzeuges zurückgegriffen werden können.

Vor diesem Hintergrund enthält die erfindungsgemäße Vorrichtung vorteilhafterweise erste Erfassungsmittel, insbesondere einen Querbeschleunigungssensor, zur Erfassung der auf das Fahrzeug wirkenden Querbeschleunigung. Folglich kann mit einem der ersten Ermittlungsmittel eine der Querdynamikgrößen in Abhängigkeit der Querbeschleunigung des Fahrzeuges ermittelt werden. Alternativ bzw. ergänzend enthält die erfindungsgemäße Vorrichtung vorteilhafterweise zweite Erfassungsmittel, insbesondere einen Gierratensensor, zur Erfassung der Gierrate des Fahrzeuges. Weswegen mit einem der ersten Ermittlungsmittel eine der Querdynamikgrößen in Abhängigkeit der Gierrate des Fahrzeuges ermittelt wird. Besonders vorteilhaft ist es, wenn die erfindungsgemäße Vorrichtung genau zwei erste Ermittlungsmittel enthält. Je eines für die ersten Erfassungsmittel und eines für die zweiten Erfassungsmittel. Dadurch wird eine genauere Erkennung der Pendelbewegung ermöglicht, da zwei voneinander unabhängig ermittelte Größen zur Auswertung bereitstehen.

Als besonders vorteilhaft hat sich erwiesen, wenn eine Differenz zwischen einem Sollwert für die Gierrate und der Gierrate des Fahrzeuges ermittelt wird, und wenn eine der Querdynamikgrößen in Abhängigkeit dieser Differenz ermittelt wird. Dabei wird der Sollwert für die Gierrate in Abhängigkeit der Fahrzeuggeschwindigkeit und des vom Fahrer eingestellten Lenkwinkels mit Hilfe eines geeigneten Fahrzeugmodells ermittelt. Somit enthält die so ermittelte Querdynamikgröße eine Information über die vom Fahrer durchgeführte Lenkbewegung. D.h. es liegt somit beispielsweise eine Information darüber vor, ob der Fahrer einen Slalomkurs fährt oder nicht und die sich in diesem Fall einstellende Pendelbewegung vom Fahrer gewollt ist, d.h. nicht auf äußere Einflüsse wie beispielsweise Seitenwind zurückgeht.

Alternativ oder ergänzend zu der vorstehend beschriebenen Berücksichtigung der Differenz hat es sich als vorteilhaft erwiesen, daß die Vorrichtung vierte Ermittlungsmittel enthält, mit denen eine Lenkgröße, die die vom Fahrer durchgeführte Lenkbewegung repräsentiert, ermittelt wird. Die Lenkgröße wird vorteilhafterweise in Abhängigkeit der vom Fahrer über einen vorbestimmten Zeitraum hinweg eingestellten Lenkwinkel ermittelt. Die Berücksichtigung eines Zeitraumes führt zu einer aussagekräftigen Information über die Lenkbewegung des Fahrers, da verschiedene vom Fahrer während dieser Zeitdauer eingestellte Lenkwinkel berücksichtigt werden. Diese Ermittlung erfolgt vorteilhafterweise unter Verwendung eines Integriermittels.

Da kleine Lenkwinkel, d.h. Lenkwinkel, die auf geringfügige Lenkbewegungen des Fahrers zurückgehen, für gewöhnlich nicht zu einer Pendelbewegung des Fahrzeuges führen, bleiben bei der Ermittlung der Lenkgröße kleine Lenkwinkel unberücksichtigt. Diese kleinen Lenkwinkel werden durch Verwendung eines Ausblendmittels mit geeignet gewählter Totzone, welches als allgemein bekannt vorausgesetzt werden kann, ausgeblendet. D.h. von den mit Hilfe des Lenkwinkelsensors erfaßten Lenkwinkeln, die dem Ausblendmittel als Eingangsgrößen zugeführt werden, gibt das Ausblendmittel nur die Lenkwinkel als Ausgangsgrößen aus, deren Wert nicht innerhalb der Totzone, die einen Wertebereich für den Wert des Lenkwinkels beschreibt, liegen. Ergänzend oder alternativ bleiben sich aus zeitlich langsam verlaufenden Lenkwinkeländerungen ergebende Lenkwinkel ebenfalls unberücksichtigt. Dies vor dem Hintergrund, daß zeitlich langsam verlaufende Lenkwinkeländerungen für gewöhnlich nicht zu einer Pendelbewegung des Fahrzeuges führen. Die sich aus zeitlich langsam verlaufenden Lenkwinkeländerungen ergebenden Lenkwinkel werden vorteilhafterweise durch Verwendung eines Hochpaßfilters ausgefiltert.

Die in den dritten Ermittlungsmitteln stattfindende Ermittlung wird ferner in Abhängigkeit der Lenkgröße durchgeführt. Vorteilhafterweise wird die Erkennung der Pendelbewegung dann nicht ausgeführt, wenn der Wert der Lenkgröße größer als ein zugehöriger Schwellenwert ist, da dann davon auszugehen ist, daß die Pendelbewegung des Fahrzeuges auf vom Fahrer durchgeführte Lenkbewegungen, d.h. Fahrmanöver wie beispielsweise eine Slalomfahrt zurückgeht, und somit vom Fahrer gewollt ist.

Die beiden vorstehend aufgeführten Vorgehensweisen, zum einen die Auswertung der Differenz und zum anderen die Ermittlung einer Lenkgröße können in redundanter Weise gleichzeitig eingesetzt werden.

Von besonderem Vorteil hat sich erwiesen, daß der Wert des zu der wenigstens einen Querdynamikgröße zugehörigen Schwellenwertes und/oder der Wert des zu der Geschwindigkeitsgröße zugehörigen Schwellenwertes abhängig davon ist, ob eine Pendelbewegung erkannt wurde. Dabei ist, wenn eine Pendelbewegung erkannt wurde, der verwendete Wert kleiner als der Wert, der verwendet wird, solange noch keine Pendelbewegung erkannt wurde. D.h. durch den kleineren Wert werden, wenn eine Pendelbewegung erkannt wurde, die aufgrund der Erkennung durchgeführten Eingriffe in den Motor und/oder in die einzelnen Bremsen eine längere Zeit durchgeführt als bei einem größeren Wert. Dies ergibt eine zusätzliche Sicherheitsreserve. Allgemein formuliert wird durch die vorstehend beschriebene Vorgehensweise bei der Festlegung der Werte eine Hysteresefunktion definiert.

Wie bereits eingangs dargelegt, treten die Pendelbewegungen des Fahrzeuges in einem vorbestimmten Frequenzbereich auf. Folglich besteht eine erste Maßnahme bei der Erkennung einer Pendelbewegung eines Fahrzeuges darin, festzustellen, ob in diesem Frequenzbereich Signale oder Größen vorliegen, die für eine Pendelbewegung charakteristisch bzw. repräsentativ sind. Als besonders vorteilhaft hat sich in diesem Zusammenhang erwiesen, daß das wenigstens eine erste Ermittlungsmittel ein erstes Filtermittel, insbesondere einen Bandpaß, enthält. Die Verwendung eines Bandpasses ist verglichen mit den aus dem Stand der Technik bekannten Verfahren (Beobachtung eines Zeitfensters, Ermittlung von Nulldurchgängen) weitaus weniger aufwendig.

Mit dem Filtermittel können in einfacher Art und Weise, und verglichen mit dem bekannten Stand der Technik zudem ohne großen Aufwand aus der dem ersten Ermittlungsmittel zur Ermittlung der Querdynamikgröße zugeführten Eingangsgröße die Anteile ausgefiltert werden, die in dem vorbestimmten Frequenzbereich, der für die Pendelbewegung des Fahrzeuges charakteristisch ist, liegen. Die Querdynamikgröße wird dann in Abhängigkeit der ausgefilterten Anteile ermittelt. Bei den vorstehend erwähnten Eingangsgrößen handelt es sich wie bereits weiter oben ausgeführt, um die auf das Fahrzeug wirkende Querbeschleunigung oder um die Gierrate des Fahrzeuges oder um die Differenz, die aus der Gierrate für das Fahrzeug und dem Sollwert für die Gierrate ermittelt wird.

Die Vorrichtung enthält, wie es für Fahrzeuge, die mit einer Fahrdynamikregelung ausgestattet sind, üblich ist, Mittel zur Beeinflussung des vom Motor abgegebenen Moments und/oder den Rädern des Fahrzeuges zugeordnete Bremsen. Vorteilhafterweise werden bei einer erkannten Pendelbewegung des Fahrzeuges die Mittel zur Beeinflussung des vom Motor abgegebenen Moments und die den Rädern des Fahrzeuges zugeordneten Bremsen im Sinne einer Reduzierung der Fahrzeuggeschwindigkeit angesteuert. Hierbei werden die Bremsen vorteilhafterweise gleichmäßig angesteuert. Durch die Reduzierung der Fahrzeuggeschwindigkeit erreicht man folgendes: Die Fahrzeuggeschwindigkeit unterschreitet wieder die kritische Geschwindigkeit, wodurch bereits vorhandene Pendelbewegungen eine Dämpfung erfahren und dadurch der Anhänger wieder stabilisiert wird. D.h. durch die Eingriffe wird die Geschwindigkeit des Fahrzeuges wieder in einen unkritischen Bereich geführt.

Alternativ werden bei einer erkannten Pendelbewegung des Fahrzeuges die den Rädern des Fahrzeuges zugeordneten Bremsen individuell so angesteuert, daß dadurch ein auf das Fahrzeug wirkendes Giermoment erzeugt wird, welches der Pendelbewegung entgegenwirkt. Dadurch wird ebenfalls eine Stabilisierung des Fahrzeuges erreicht, die zudem den Vorteil hat, daß sie mit einer für den Fahrer kaum wahrnehmbaren Reduzierung der Fahrzeuggeschwindigkeit einher geht. Die Durchführung der vorstehend beschriebenen radindividuellen Bremsung, die vorteilhafterweise gegenphasig zu der zu unterdrückenden Pendelbewegung verläuft, kann gewissermaßen als eine Anpassung der eigentlichen Fahrdynamikregelung bzw. des eigentlichen Fahrdynamikreglers angesehen werden, denn in diesem Fall werden Eingriffe durchgeführt, die nicht auf das der Fahrdynamikregelung zugrundeliegende Regelungskonzept zurückgehen, vielmehr werden in diesem Fall die eigentlichen Eingriffe der Fahrdynamikregelung unterbunden.

Die vorstehend erwähnte Ansteuerung der Bremsen des Fahrzeuges ist folgendermaßen zu verstehen: Handelt es sich bei dem Fahrzeug um ein Einzelfahrzeug, so werden dessen Bremsen angesteuert. Handelt es sich bei dem Fahrzeug um ein Fahrzeuggespann, so ergeben sich je nach Ausstattung des Anhängers oder Aufliegers verschiedene Möglichkeiten. Verfügt lediglich das Zugfahrzeug über den Rädern zugeordnete Bremsen, so werden nur diese angesteuert. Verfügt auch der Anhänger oder Auflieger über den Rädern zugeordnete Bremsen, so können die Bremsen des Zugfahrzeuges oder die des Anhängers oder Aufliegers entweder in Alleinstellung oder aber auch gemeinsam angesteuert werden.

Gemäß einem ersten Ausführungsbeispiel enthält das wenigstens eine erste Ermittlungsmittel Mittel zur Bildung eines Mittelwertes, mit dem die Querdynamikgröße in Abhängigkeit der ausgefilterten Anteile durch Mittelwertbildung ermittelt wird. Bei dem Mittel zur Bildung des Mittelwertes handelt es sich vorteilhafterweise um einen Tiefpaß. Vorteilhafterweise enthält das wenigstens eine erste Ermittlungsmittel ferner ein Betragsbildungsmittel, mit dem vor Bildung des Mittelwertes die Beträge der ausgefilterten Anteile ermittelt werden. Die auf diesem Weg erhaltene Querdynamikgröße ist ein Maß für die momentane Amplitude und damit die Stärke der Pendelbewegung. Durch die Betragsbildung und die anschließende Mittelwertbildung wird eine Größe erzeugt, die keine Schwankungen mehr aufweist, und somit ein eindeutiges und aussagekräftiges Kriterium darstellt.

Gemäß einem zweiten Ausführungsbeispiel enthält das wenigstens eine erste Ermittlungsmittel erste Mittel, mit denen in Abhängigkeit der ausgefilterten Anteile eine Amplitudengröße ermittelt wird, die die Amplitude der dem ersten Ermittlungsmittel zugeführten Eingangsgröße repräsentiert. Die Amplitudengröße entspricht dabei der Querdynamikgröße. Darüber hinaus enthält das wenigstens eine erste Ermittlungsmittel zweite Mittel, mit denen in Abhängigkeit der ausgefilterten Anteile eine Störgröße ermittelt wird. Die Störgröße repräsentiert die Anteile der dem ersten Ermittlungsmittel zugeführten Eingangsgröße, die in dieser Eingangsgröße zwar enthalten sind, die jedoch unabhängig von der zu ermittelnden Pendelbewegung des Fahrzeuges sind. Mit anderen Worten: Die der Störgröße zugrundeliegenden Anteile sind zwar in der Eingangsgröße enthalten, gehen aber nicht auf eine Pendelbewegung des Fahrzeuges zurück. Die Störgröße repräsentiert beispielsweise Einflüsse, wie sie bei einer Schlechtwegfahrt oder bei einem vom Fahrer durchgeführten Spurwechsel auftreten können.

Die in den dritten Ermittlungsmitteln stattfindende Ermittlung wird ferner in Abhängigkeit der Störgröße durchgeführt. Dabei hat sich als vorteilhaft erwiesen, daß die Erkennung der Pendelbewegung dann nicht durchgeführt wird, wenn ein aus der Störgröße und der Amplitudengröße gebildetes Verhältnis größer als ein zugehöriger Schwellenwert ist.

Durch die Störgröße steht ein Kriterium zur Verfügung mit dem die Erkennung der Pendelbewegung des Fahrzeuges dahingehend verbessert werden kann, daß Situationen, die nicht eindeutig einer Pendelbewegung des Fahrzeuges entsprechen, unberücksichtigt bleiben.

Die in dem wenigstens einen ersten Ermittlungsmittel enthaltenen ersten Mittel enthalten wiederum Signalerzeugungsmittel, mit denen zwei um eine vorgegebene Phase, insbesondere 90°, verschobene Signale erzeugt werden. Vorteilhafterweise haben diese beiden Signale die gleiche Amplitude. Die ersten Mittel enthalten ferner Demodulationsmittel, mit denen in Abhängigkeit der ausgefilterten Anteile und der beiden mit den Signalerzeugungsmitteln erzeugten Signalen zwei demodulierte Signale erzeugt werden. Die Demodulationsmittel sind vorteilhafterweise als Multipliziermittel ausgebildet. Darüber hinaus enthalten die ersten Mittel Filtermittel, die vorteilhafterweise als Tiefpässe ausgebildet sind, und mit denen die demodulierten Signale gefiltert werden. In Abhängigkeit der dabei erhaltenen gefilterten demodulierten Signale wird die Amplitudengröße ermittelt.

Bei den beiden mit Hilfe der Signalerzeugungsmittel erzeugten Signalen handelt es sich um periodische Signale, deren Frequenz der zu erwartenden Pendeloder Schlingerfrequenz des Fahrzeuges entspricht. Durch die Demodulation, die einer Multiplikation entspricht, werden die ausgefilterten Anteile, die die Pendelfrequenz aufweisen, in einen Gleichanteil und in eine Schwingung mit der doppelten Frequenz umgesetzt. Durch die nachgeschalteten Tiefpässe werden die Gleichanteile, die die eigentliche Information über die Pendelbewegung enthalten, herausgefiltert. Diese Vorgehensweise entspricht in ihrer Gesamtheit einer Bandpaßfilterung mit sehr hoher Güte.

Die in dem wenigstens einen ersten Ermittlungsmittel enthaltenen zweiten Mittel enthalten Modulationsmittel, die vorteilhafterweise als Multipliziermittel ausgebildet sind, mit denen in Abhängigkeit der beiden gefilterten demodulierten Signale und den beiden mit den Signalerzeugungsmitteln erzeugten Signalen zwei modulierte Signale erzeugt werden. Diese beiden modulierten Signale werden einem Additionsmittel mit nachgeordnetem Bewertungsmittel zugeführt, wobei mit dem Additionsmittel und dem Bewertungsmittel eine Größe ermittelt wird, die die zu ermittelnde bzw. zu erkennende Pendelbewegung des Fahrzeuges repräsentiert, jedoch von Störeinflüssen befreit ist. D.h. die mit dem Additionsmittel und dem Bewertungsmittel ermittelte Größe repräsentiert die Pendelbewegung des Fahrzeuges, die ermittelt bzw. erkannt werden soll, weist allerdings keine Anteile auf, die von Störeinflüssen herrühren. D.h. diese Größe beschreibt die Pendelbewegung unverfälscht. Durch die Modulation werden die beiden Gleichanteile wieder in periodische Signale umgesetzt, deren Frequenz der der Pendelbewegung entspricht.

Darüber hinaus enthalten die zweiten Mittel ein Subtrahiermittel, mit dem in Abhängigkeit der ausgefilterten Anteile und der Größe, die die zu ermittelnde bzw. zu erkennende Pendelbewegung des Fahrzeuges repräsentiert, jedoch von Störeinflüssen befreit ist, eine Größe ermittelt wird, aus der durch Betragsbildung und Filterung, insbesondere unter Verwendung eines Tiefpaßfilters, die Störgröße ermittelt wird. Durch die Betragsbildung und Filterung wird sichergestellt, daß die Störgröße keine allzu großen Schwankungen aufweist und demzufolge ein aussagekräftiges Kriterium darstellt. Der vorstehend beschriebene Subtraktion nutzt die Tatsache aus, daß die gefilterten Anteile noch die weiter oben erwähnten Störanteile aufweisen, wohingegen die beiden gefilterten und demodulierten Signale, aus denen die Größe ermittelt wird, die die zu ermittelnde, von Störeinflüssen befreite Pendelbewegung des Fahrzeuges repräsentiert, frei von diesen Störanteilen ist. Somit ist die Ermittlung der Störgröße möglich.

Wie bereits eingangs erwähnt, soll es sich bei dem Fahrzeug um ein Fahrzeuggespann handeln, welches aus einem Zugfahrzeug und einem Anhänger oder Auflieger besteht. Folglich soll mit der erfindungsgemäßen Vorrichtung ein Pendeln des Anhängers oder Aufliegers erkannt werden. Ebenso soll ein vom Anhänger oder Auflieger hervorgerufenes und auf das Zugfahrzeug übertragenes Pendeln erkannt werden. Vorteilhafterweise sind sämtliche für die Erkennung des Pendelns erforderlichen Erfassungsmittel und/oder Sensormittel dem Zugfahrzeug zugeordnet. Somit ist eine kostenintensive Ausstattung sämtlicher zu einem Fuhrpark gehörender Anhänger oder Auflieger mit der erfindungsgemäß erforderlichen Sensorik nicht erforderlich.

Vorteilhafterweise wird im Falle eines Fahrzeuggespannes die Erkennung einer Pendelbewegung nur dann durchgeführt, wenn an das Zugfahrzeug auch tatsächlich ein Anhänger oder Auflieger angekoppelt ist. Um diese Situation erkennen zu können, enthält die Vorrichtung Mittel, mit denen ermittelt wird, ob an das Zugfahrzeug ein Anhänger oder Auflieger angekoppelt ist. Diese Vorgehensweise trägt zum einen zu einer Erhöhung der Sicherheit bei. Zum anderen wird die benötigte Rechenleistung bzw. Rechenkapazität und gleichzeitig auch die Rechenzeit reduziert, da die Erkennung der Pendelbewegung nur dann durchgeführt wird, wenn auch wirklich ein Anlaß für die Entstehung einer Pendelbewegung vorliegt, nämlich dann, wenn an das Zugfahrzeug ein Anhänger oder Auflieger angekoppelt ist.

Die Ermittlung, ob an das Zugfahrzeug ein Anhänger oder Auflieger angekoppelt ist, erfolgt vorteilhafterweise durch eine Überprüfung eines elektrischen Kontaktes. D.h. es wird überprüft, ob ein zum Anhänger oder Auflieger gehörender Stecker an eine am Zugfahrzeug angebrachte Dose angeschlossen ist. Hierzu bieten sich verschiedene Vorgehensweisen an.

So kann beispielsweise wenigstens ein Bremslicht des Anhängers oder Aufliegers fahrerunabhängig angesteuert werden. Ob ein Anhänger oder Auflieger angekoppelt ist, läßt sich durch eine Stromüberwachung feststellen. Fließt während der Ansteuerung in einer dem Bremslicht zugeordneten Leitung ein Strom, so ist dies ein Indiz dafür, daß an das Zugfahrzeug ein Anhänger oder Auflieger angekoppelt ist. Neben der fahrerunabhängigen Ansteuerung des Bremslichtes - in diesem Fall liegt kein durch den Fahrer eingeleiteter Bremsvorgang vor - ist es auch denkbar, einen vom Fahrer eingeleiteten Bremsvorgang im Rahmen der vorstehenden Erkennung auszuwerten. In den beschriebenen Fällen wird der elektrische Kontakt anhand eines fließenden Stromes überprüft.

Ferner kann auch ein selbsthaltendes Relais im Rahmen der Erkennung, ob ein Anhänger oder Auflieger angekoppelt ist, verwendet werden. Das Relais spricht an, wenn an der Steckdose zum Anhänger ein Stromkreis hergestellt wird.

Die Information darüber, ob an das Zugfahrzeug ein Anhänger oder Auflieger angekoppelt ist, kann dem Steuergerät oder den im Steuergerät zur Verarbeitung dieser Information enthaltenen Komponenten über einen im Fahrzeug vorhandenen CAN-Bus zugeführt werden.

An dieser Stelle sei bemerkt, daß eine nachfolgende Nennung des Begriffes Anhänger immer auch die beiden anderen Ausführungsformen - Auflieger bzw. Deichselanhänger - umfassen soll.

Zeichnung

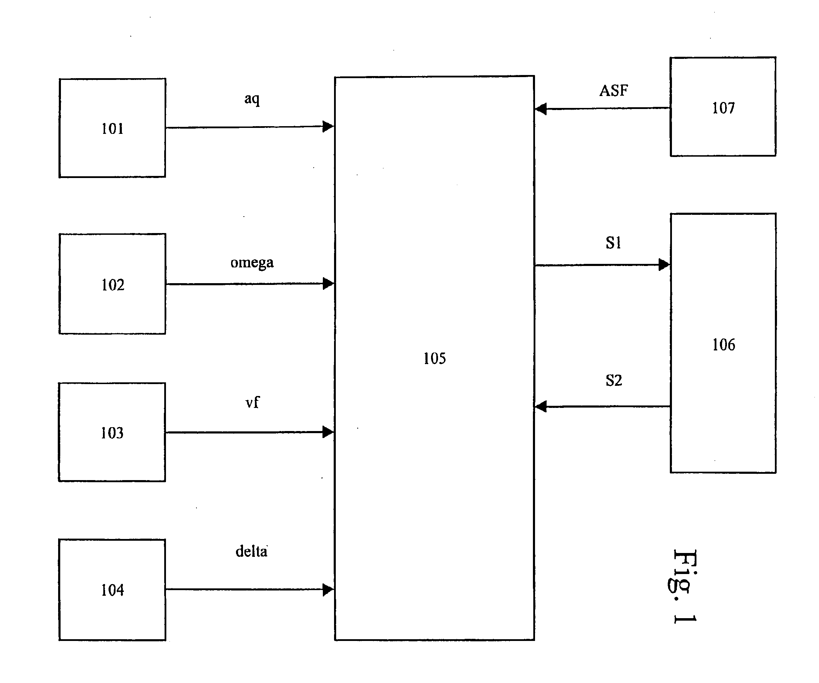

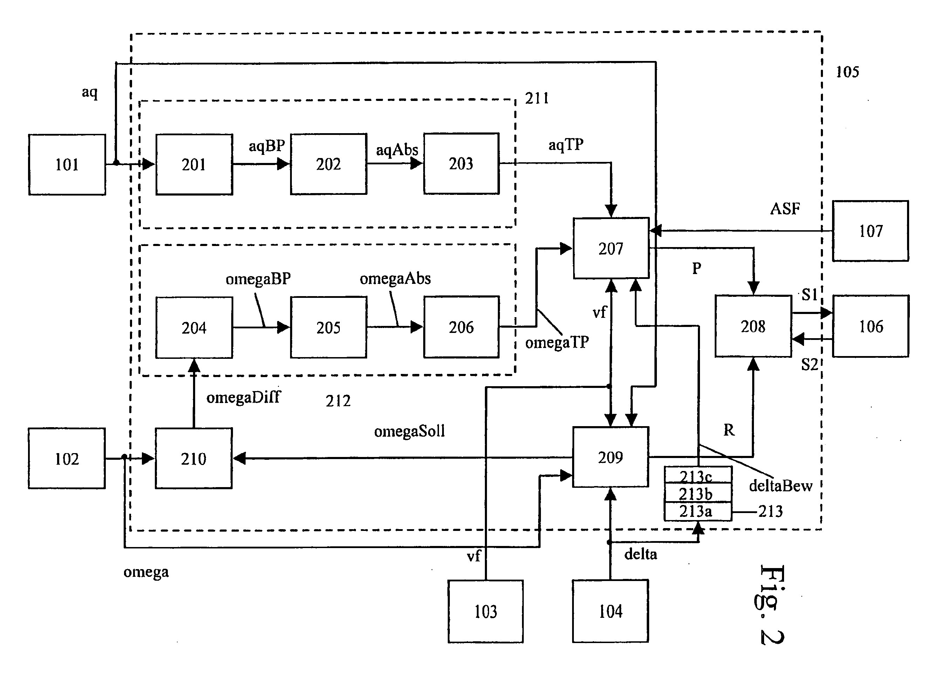

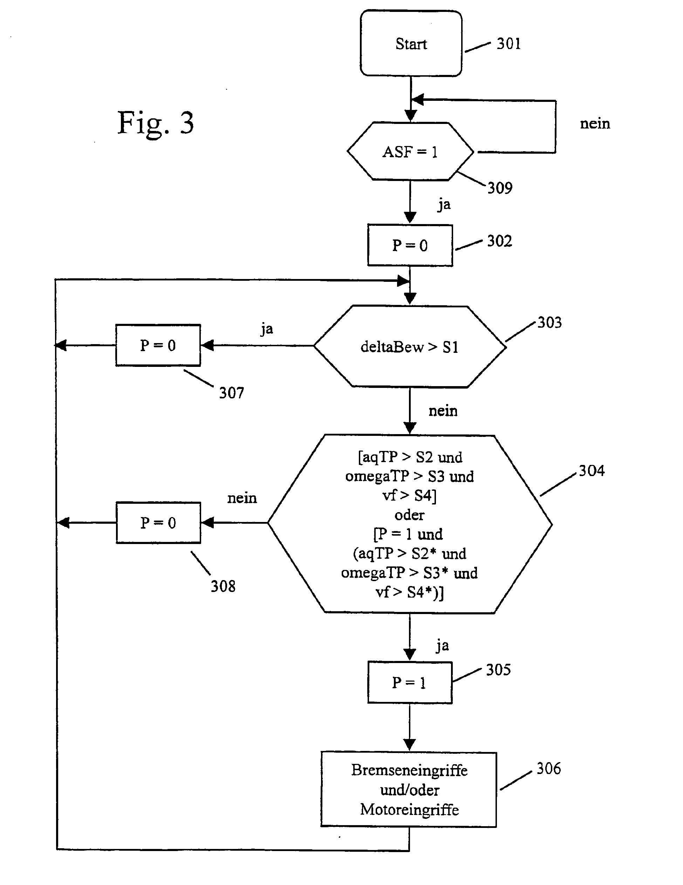

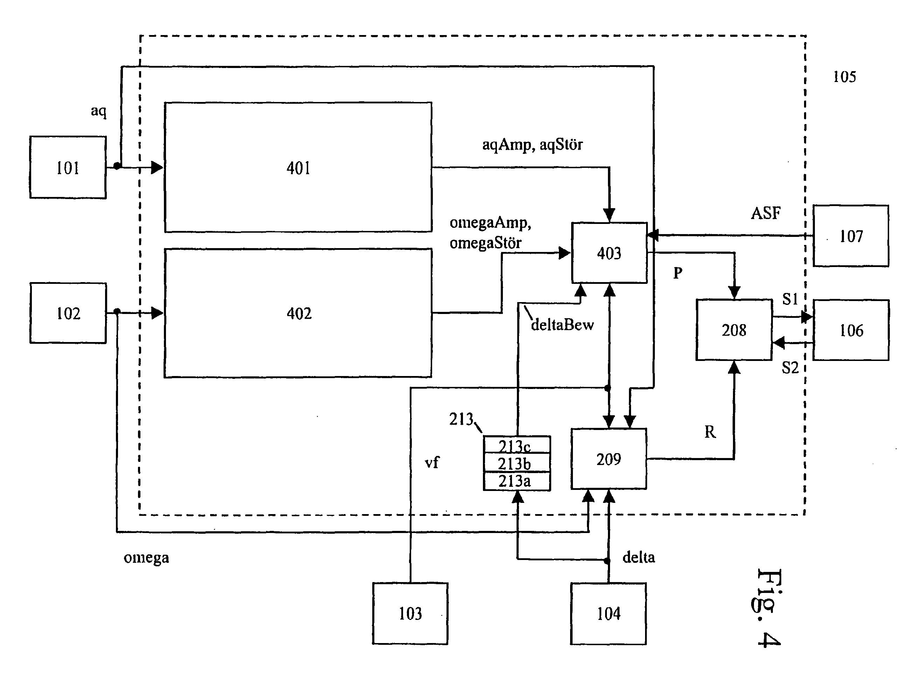

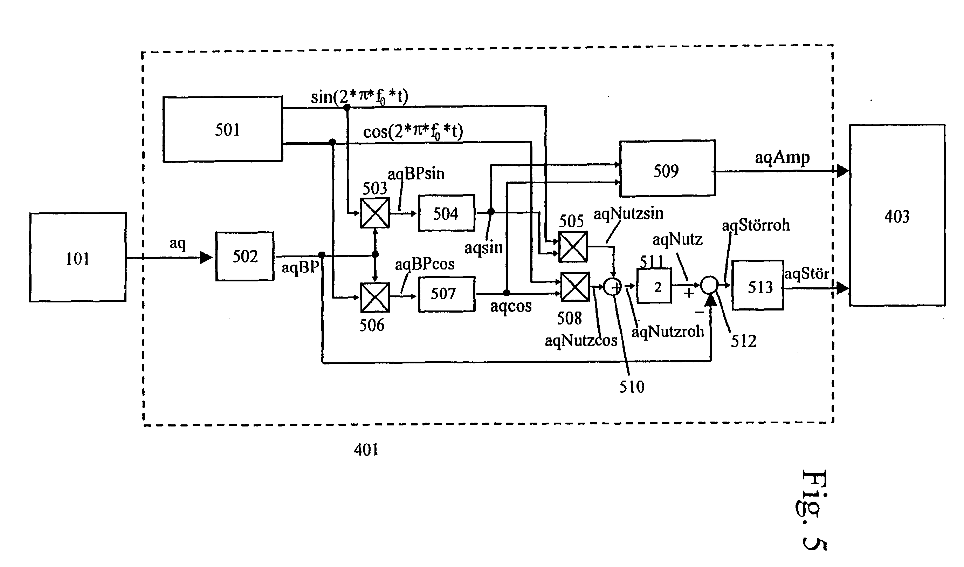

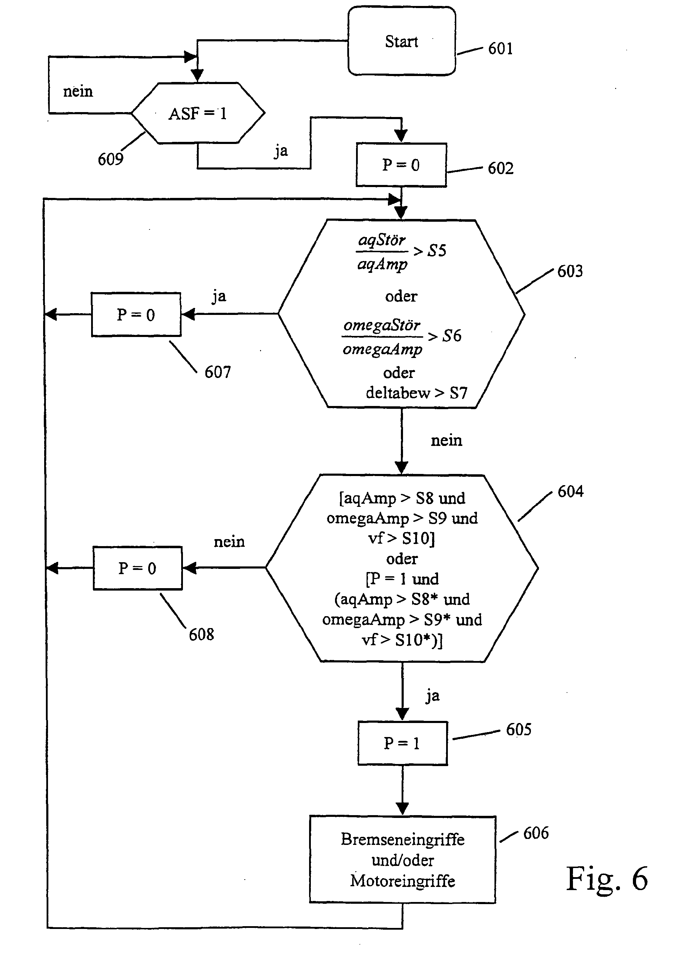

Die Zeichnung besteht aus den Figuren 1 bis 6. Figur 1 zeigt mit Hilfe eines Blockschaltbildes in allgemeiner Form ein Steuergerät, in dem die erfindungsgemäße Vorrichtung eingesetzt wird, mit der zu dem Steuergerät gehörenden Sensorik und Aktuatorik. Die Figuren 2 und 3 gehören zu einem ersten Ausführungsbeispiel. Figur 2 zeigt in Form eines Blockschaltbildes den Aufbau der erfindungsgemäßen Vorrichtung. Figur 3 zeigt mit Hilfe eines Flußdiagramms den Ablauf des in der erfindungsgemäßen Vorrichtung ablaufenden erfindungsgemäßen Verfahrens. Den Figuren 4 bis 6 liegt ein zweites Ausführungsbeispiel zugrunde. In den Figuren 4 und 5 ist die erfindungsgemäße Vorrichtung in unterschiedlichen Detailliertheitsgraden dargestellt. Figur 6 zeigt den Ablauf des zugehörigen erfindungsgemäßen Verfahrens. Blöcke bzw. Schritte, die in unterschiedlichen Figuren verwendet werden, jedoch gleiches Bezugszeichen haben, sind identisch.

Ausführungsbeispiele

In Figur 1 ist in allgemeiner Form ein Steuergerät 105 dargestellt. Bei diesem Steuergerät handelt es sich beispielsweise um ein Steuergerät, welches im Rahmen einer Fahrdynamikregelung eingesetzt wird. Bzgl. weiterführender Details sei an dieser Stelle auf die Veröffentlichung "FDR - Die Fahrdynamikregelung von Bosch" verwiesen. Dem Steuergerät werden verschiedene Sensorsignale zugeführt. Hierbei handelt es sich um die mit Hilfe eines Querbeschleunigungssensors 101 ermittelte Querbeschleunigung aq, um die mit Hilfe eines Gierratensensors 102 ermittelte Gierrate omega des Fahrzeuges, um den mit Hilfe eines Lenkwinkelsensors 104 ermittelten Lenkwinkel delta und um die Geschwindigkeit vf des Fahrzeuges, die mit Hilfe geeigneter Mittel 103 erfaßt wird. Bei den Mitteln 103 handelt es sich beispielsweise um den Rädern des Fahrzeuges zugeordnete Raddrehzahlsensoren mit nachgeordneten Auswertemitteln. Ausgehend von den dem Steuergerät zugeführten Eingangsgrößen erzeugt es gemäß den in ihm abgelegten Regelungskonzept Ansteuersignale S1 für die ihm zugeordneten Aktuatoren 106. Bei den Aktuatoren handelt es sich beispielsweise um Mittel zur Beeinflussung des vom Motor abgegebenen Moments und/oder um den Rädern des Fahrzeuges zugeordnete Bremsen. Die Bremsen wiederum können Teil einer hydraulischen oder einer elektrohydraulischen oder einer pneumatischen oder einer elektropneumatischen oder einer elektromechanischen Bremsanlage sein. Ausgehend von den Aktuatoren 106 werden dem Steuergerät Signale S2 zugeführt, die dem Steuergerät eine Information über den Betriebszustand der Aktuatoren gibt.

Darüber hinaus wird dem Steuergerät 105 ausgehend von einem Block 107, der Mittel darstellt, mit denen ermittelt wird, ob an das Zugfahrzeug ein Anhänger oder Auflieger angekoppelt ist, ein Signal ASF zugeführt. Die Erzeugung des Signals ASF kann in der eingangs erwähnten Art und Weise erfolgen. Dabei soll folgendes gelten: Wenn an das Zugfahrzeug ein Anhänger oder Auflieger angekoppelt ist, wird dem Signal ASF der Wert 1 zugewiesen. Auf die konkrete Auswertung des Signals ASF wird im Zusammenhang mit den Figuren 3 oder 6 eingegangen.

Nachfolgend wird anhand der Figuren 2 und 3 ein erstes Ausführungsbeispiel behandelt.

In Figur 2 sind die im Steuergerät enthaltenen Komponenten durch den strichlinierten Block 105 gekennzeichnet. Zunächst sei auf den Block 209 eingegangen, der den im Steuergerät 105 enthaltenen Reglerkern darstellt. Eine detaillierte Beschreibung des Reglerkerns 209 kann der Veröffentlichung "FDR - Die Fahrdynamikregelung von Bosch" entnommen werden.

Dem Reglerkern werden die mit dem Block 101 erfaßte Querbeschleunigung aq, die auf das Fahrzeug wirkt, die mit dem Block 102 erfaßte Gierrate omega des Fahrzeuges, die mit dem Block 103 erfaßte Geschwindigkeit vf des Fahrzeuges sowie der mit dem Block 104 erfaßte Lenkwinkel delta zugeführt. Wie bereits erwähnt, handelt es sich bei dem Steuergerät 105 um ein Steuergerät zur Regelung der Fahrdynamik des Fahrzeuges, insbesondere zur Regelung der Gierrate des Fahrzeuges. Hierzu wird die dem Reglerkern zugeführte Gierrate omega mit einem Sollwert omegaSoll für die Gierrate verglichen. Der Sollwert omegaSoll wird im Reglerkern mit Hilfe eines geeigneten Fahrzeugmodells in Abhängigkeit der Fahrzeuggeschwindigkeit vf und dem Lenkwinkel delta ermittelt. In Abhängigkeit der sich aus der Gierrate omega und dem Sollwert omegaSoll ergebenden Abweichung werden die Größen R ermittelt, mit denen die Aktuatoren 106 im Sinne der Gierratenregelung anzusteuern sind. Die Größen R werden einem Block 208 zugeführt.

Der Sollwert omegaSoll für die Gierrate wird einem Block 210 zugeführt, in welchem in Abhängigkeit dieses Sollwertes und der Gierrate omega eine Differenz omegaDiff gebildet wird, die einem Block 204 zugeführt wird. Bei dem Block 204 handelt es sich um Filtermittel, insbesondere um einen Bandpaß. Mit dem Filtermittel 204 werden aus der Differenz omegaDiff Anteile omegaBP ausgefiltert, die in einem vorbestimmten Frequenzbereich liegen, der für die Pendelbewegung des Fahrzeuges charakteristisch ist. Die ausgefilterten Anteile omegaBP werden einem Block 205 zugeführt, bei dem es sich um ein Betragsbildungsmittel handelt, und mit dem die Beträge omegaAbs der ausgefilterten Anteile omegaBP ermittelt werden. Die Beträge omegaAbs werden einem Mittel zur Bildung eines Mittelwertes, welches insbesondere als Tiefpaß ausgebildet ist, zugeführt. Der aus den Beträgen gebildete Mittelwert omegaTP, der der in Abhängigkeit der Gierrate ermittelten Querdynamikgröße entspricht, wird einem Block 207, bei dem es sich um ein drittes Ermittlungsmittel handelt, zugeführt.

Die Blöcke 204, 205 und 206 sind in Figur 2 zu einem ersten Ermittlungsmittel 212 zusammengefaßt, wobei die Differenz omegaDiff die Eingangsgröße dieses Ermittlungsmittels darstellt. An dieser Stelle sei auch erwähnt, daß anstelle der Differenz dem ersten Ermittlungsmittel 212 auch lediglich die Gierrate omega als Eingangsgröße zugeführt werden kann. Die Vorgehensweise bei der Ermittlung der Querdynamikgröße omegaTP bleibt davon unberührt.

Neben dem ersten Ermittlungsmittel 212 enthält die erfindungsgemäße Vorrichtung ein weiteres erstes Ermittlungsmittel 211, welches identisch zu dem ersten Ermittlungsmittel 212 aufgebaut ist. Als Eingangsgröße wird dem ersten Ermittlungsmittel 211 die mit Hilfe des Querbeschleunigungssensor 101 ermittelte Querbeschleunigung aq zugeführt. Entsprechend der im Zusammenhang mit dem ersten Ermittlungsmittel 212 beschriebenen Vorgehensweise werden zunächst mit Hilfe eines Filtermittels 201 die ausgefilterten Anteile aqBP ermittelt, die einem Betragsbildungsmittel 202 zugeführt werden, mit dem die Beträge aqAbs ermittelt werden, die wiederum einem Mittel zur Bildung eines Mittelwertes 203 zugeführt, welches aus den Beträgen aqAbs den Mittelwert aqTP ermittelt, der der ausgehend von der Querbeschleunigung ermittelten Querdynamikgröße entspricht. Auch die Querdynamikgröße aqTP wird dem Block 207 zugeführt.

Neben den beiden Querdynamikgrößen aqTP und omegaTP werden dem Block 207 ferner die Geschwindigkeit vf des Fahrzeuges sowie eine Lenkgröße deltaBew zugeführt. Die Lenkgröße deltaBew wird in einem Block 213 in Abhängigkeit des diesem zugeführten Lenkwinkels delta ermittelt. Hierzu wird der Lenkwinkel zunächst einem Ausblendmittel 213a mit geeignet gewählter Totzone zugeführt, mit dem kleine Lenkwinkel ausgeblendet werden. Die von dem Ausblendmittel 213a durchgelassenen Lenkwinkel werden einem Hochpaßfilter 213b zugeführt. Mit dem Hochpaßfilter werden Lenkwinkel, die sich aus zeitlich langsam verlaufenden Lenkwinkeländerungen ergeben, ausgefiltert. Die verbleibenden Lenkwinkel werden einem Integriermittel 213c zugeführt, mit dem die verbleibenden Lenkwinkel aufintegriert werden und als Lenkgröße deltaBew ausgegeben werden. In der Zusammenschau wird die Lenkgröße in Abhängigkeit der vom Fahrer über einen vorbestimmten Zeitraum hinweg eingestellten Lenkwinkel ermittelt, wobei allerdings kleine Lenkwinkel und/oder sich aus zeitlich langsam verlaufenden Lenkwinkeländerungen ergebende Lenkwinkel unberücksichtigt bleiben.

Die dem Block 207 zugrundeliegende konkrete Vorgehensweise bzgl. der Erkennung einer Pendelbewegung eines Fahrzeuges wird im Zusammenhang mit der Figur 3 ausführlich dargestellt. An dieser Stelle sei vorab festgehalten, daß bei einer erkannten Pendelbewegung des Fahrzeuges der Block 207 für die Größe P einen entsprechenden Wert ausgibt.

Die im Block 207 erzeugte Größe P wird dem Block 208 zugeführt. Der Block 208 koordiniert die von den Aktuatoren 106, aufgrund der dem Block 208 zugeführten Größen P bzw. R, auszuführenden Eingriffe. Dabei ist folgende Vorgehensweise denkbar: Solange keine Pendelbewegung des Fahrzeuges erkannt wird (P = 0), werden, ausgehend von der Größe R, mit Hilfe der Aktuatoren 106 die im Rahmen der Fahrdynamikregelung zur Stabilisierung des Fahrzeuges erforderlichen Eingriffe ausgeführt. Sobald jedoch eine Pendelbewegung des Fahrzeuges erkannt wird (P = 1), werden entweder ausgehend von der Größe P die zur Beseitigung der Pendelbewegung erforderlichen Eingriffe anstelle der im Rahmen der Fahrdynamikregelung zur Stabilisierung des Fahrzeuges auszuführenden Eingriffe durchgeführt. Oder aber die im Rahmen der Fahrdynamikregelung zur Stabilisierung des Fahrzeuges erforderlichen Eingriffe werden ausgehend von der Größe P so modifiziert, daß neben der im Rahmen der Fahrdynamikregelung durchzuführenden Stabilisierung des Fahrzeuges gleichzeitig auch die Pendelbewegung unterbunden wird. Die vorstehend beschriebene Ausblendung bzw. Modifikation kann auch als Anpassung des Reglers aufgefaßt werden.

Ferner wird dem Block 207 ausgehend von dem Block 107 das Signal ASF, mit dem angezeigt wird, ob an das Zugfahrzeug ein Anhänger oder Auflieger angekoppelt ist, zugeführt.

Auf die Bedeutung der Größen S1 und S2, die zwischen den Blöcken 208 und 106 ausgetauscht werden, wurde bereits im Zusammenhang mit Figur 1 eingegangen.

In Figur 3 ist der Ablauf des dem ersten Ausführungsbeispiel zugrundeliegenden Verfahrens dargestellt. Das Verfahren beginnt mit einem Schritt 301, an den sich ein Schritt 309 anschließt. In diesem Schritt wird das Signal ASF ausgewertet. Wird festgestellt, daß das Signal ASF den Wert 1 aufweist, was gleichbedeutend damit ist, daß an das Zugfahrzeug ein Anhänger oder Auflieger angekoppelt ist, so wird anschließend an den Schritt 309 ein Schritt 302, mit dem die eigentliche Erkennung einer Pendelbewegung beginnt, ausgeführt. Wird dagegen festgestellt, daß das Signal ASF nicht den Wert 1 aufweist, so wird erneut der Schritt 309 ausgeführt. Durch die im Schritt 309 stattfindende Abfrage wird sichergestellt, daß die Erkennung einer Pendelbewegung nur dann durchgeführt wird, wenn an das Zugfahrzeug auch tatsächlich ein Anhänger oder Auflieger angekoppelt ist.

An dieser Stelle sei festgehalten, daß der Schritt 309 optional ist und für die Ausführung der Funktion der Erkennung einer Pendelbewegung nicht zwingend erforderlich ist, weswegen er auch entfallen kann. Entfällt der Schritt 309, so ist auch der in den Figuren 1 und 2 dargestellte Block 107 nicht erforderlich.

Im Schritt 302 wird die Größe P, bei der es sich um ein Flag handelt, und die anzeigt, ob eine Pendelbewegung des Fahrzeuges vorliegt, initialisiert. Im vorliegenden Fall wird der Größe P der Wert 0 zugewiesen, d.h. es wird davon ausgegangen, daß keine Pendelbewegung vorliegt. Anschließend an den Schritt 302 wird ein Schritt 303 ausgeführt, in dem die Lenkgröße deltaBew ausgewertet wird. Hierzu wird überprüft, ob die Lenkgröße deltaBew größer als ein zugehöriger Schwellenwert S1 ist. Wird im Schritt 303 festgestellt, daß die Lenkgröße größer als der Schwellenwert S1 ist, was gleichbedeutend damit ist, daß die vom Fahrer durchgeführten Lenkbewegungen die Erkennung einer Pendelbewegung nicht zulassen bzw. die Durchführung einer Erkennung als nicht erforderlich erscheinen lassen, da beispielsweise eine Slalomfahrt zugrunde liegt, die die Pendelbewegung verursacht, so wird anschließend an den Schritt 303 ein Schritt 307 ausgeführt, in dem der Größe P der Wert 0 zugewiesen wird. Nach dem Schritt 307 wird erneut der Schritt 303 ausgeführt. Wird dagegen im Schritt 303 festgestellt, daß die Lenkgröße kleiner als der Schwellenwert S1 ist, was gleichbedeutend damit ist, daß die vom Fahrer durchgeführten Lenkbewegungen die Erkennung einer Pendelbewegung zulassen bzw. die Durchführung einer Erkennung als nicht erforderlich erscheinen lassen, da beispielsweise eine Slalomfahrt zugrunde liegt, die die Pendelbewegung verursacht, so wird anschließend an den Schritt 303 ein Schritt 304 ausgeführt.

Im Schritt 304 werden zwei Teilabfragen ausgeführt. Die erste Teilabfrage, die keine Einzelabfrage bzgl. der Größe P enthält, betrifft die Situation bei der eine Pendelbewegung des Fahrzeuges noch nicht erkannt wurde. Bei der ersten Teilabfrage werden folgende Einzelabfragen überprüft: Ist die Querdynamikgröße aqTP größer als ein Schwellenwert S2? Ist die Querdynamikgröße omegaTP größer als ein Schwellenwert S3? Ist die Geschwindigkeitsgröße vf größer als ein Schwellenwert S4? Wenn diese drei Einzelabfragen alle gleichzeitig erfüllt sind, dann ist die erste Teilabfrage erfüllt.

Die zweite Teilabfrage enthält eine Einzelabfrage bzgl. der Größe P und somit die Situation bei der eine Pendelbewegung des Fahrzeuges bereits erkannt wurde. Bei dieser Einzelabfrage wird überprüft, ob der Größe P der Wert 1 zugewiesen ist. Darüber hinaus enthält die zweite Teilabfrage die drei in der ersten Teilabfrage enthaltenen Einzelabfragen, wobei jedoch die im Rahmen der ersten Teilabfrage verwendeten Schwellenwerte S2, S3 und S4 durch die Schwellenwerte S2*, S3* und S4* ersetzt sind, deren Werte jeweils kleiner sind als die der Schwellenwerte S2, S3 und S4. Wenn alle vier Einzelabfragen erfüllt sind, dann ist die zweite Teilabfrage erfüllt.

Wird im Schritt 304 festgestellt, daß die erste Teilabfrage oder die zweite Teilabfrage erfüllt ist, d.h. wird festgestellt, daß eine der beiden Teilabfragen erfüllt ist, was gleichbedeutend damit ist, daß eine Pendelbewegung des Fahrzeuges vorliegt, so wird anschließend an den Schritt 304 ein Schritt 305 ausgeführt, in dem der Größe P der Wert 1 zugewiesen wird. Anschließend an den Schritt 305 wird ein Schritt 306 ausgeführt, in dem durch entsprechende Ansteuerung der Radbremsen und/oder der Mittel zur Beeinflussung des vom Motor abgegebenen Moments die Bremseneingriffe und/oder Motoreingriffe zur Beseitigung der Pendelbewegung durchgeführt werden. Anschließend an den Schritt 306 wird erneut der Schritt 303 ausgeführt. Wird dagegen im Schritt 304 festgestellt, daß keine der beiden Teilabfragen erfüllt ist, so wird anschließend an den Schritt 304 ein Schritt 308 ausgeführt, in dem der Größe P der Wert 0 zugewiesen wird. Anschließend an den Schritt 308 wird erneut der Schritt 303 ausgeführt.

An dieser Stelle sei erwähnt, daß auch eine andere Ausgestaltung der beiden im Schritt 304 ausgeführten Teilabfragen denkbar ist. So können die Teilabfragen auch so aufgebaut sein, daß die drei Einzelabfragen, die im einzelnen die Fahrzeuggeschwindigkeit, die Querbeschleunigung und die Gierrate betreffen, nicht gleichzeitig erfüllt sein müssen, damit die Teilabfrage erfüllt ist. Denkbar wäre auch, daß je Teilabfrage die Einzelabfrage für die Geschwindigkeit und eine der beiden Teilabfragen, die die Querbeschleunigung bzw. die Gierrate betreffen, gleichzeitig erfüllt sein müssen.

Im folgenden wird mit Hilfe der Figuren 4, 5 und 6 ein zweites Ausführungsbeispiel behandelt.

In Figur 4 sind die im Steuergerät enthaltenen Komponenten zu dem strichlinierten Block 105 zusammengefaßt. Auf die bereits im Zusammenhang mit Figur 2 beschriebenen Blöcke - hierbei handelt es sich im einzelnen um die Blöcke 106, 208, 209 bzw. 213 sowie um die Erfassungsmittel 101, 102, 103 sowie 104 - wird an dieser Stelle nicht mehr eingegangen, vielmehr wird auf die Beschreibung der Figur 2 verwiesen.

Entsprechend der in Figur 2 dargestellten Vorrichtung weist die in Figur 4 gezeigte Vorrichtung ebenfalls zwei erste Ermittlungsmittel 401 bzw. 402 auf. Mit Hilfe des ersten Ermittlungsmittels 401 wird in Abhängigkeit der Querbeschleunigung aq eine Querdynamikgröße aqAmp und eine Störgröße aqStör ermittelt, die beide dem Block 403, der ein drittes Ermittlungsmittel darstellt, zugeführt werden. Mit Hilfe des ersten Ermittlungsmittels 402 wird in Abhängigkeit der Gierrate omega eine Querdynamikgröße omegaAmp und eine Störgröße omegaStör ermittelt, die ebenfalls beide dem Block 403 zugeführt werden. Auf den konkreten Aufbau der beiden ersten Ermittlungsmittel 401 bzw. 402 wird im Zusammenhang mit Figur 5 eingegangen.

Neben den beiden Querdynamikgrößen aqAmp und omegaAmp sowie den beiden Störgrößen aqStör und omegaStör werden dem Block 403 ferner noch die Geschwindigkeitsgröße vf, die die Geschwindigkeit des Fahrzeuges beschreibt, und die Lenkgröße deltaBew zugeführt. In Abhängigkeit dieser Größen wird im Block 403 ermittelt, ob eine Pendelbewegung des Fahrzeuges vorliegt. Auf die konkrete Vorgehensweise bei der Erkennung der Pendelbewegung wird im Zusammenhang mit Figur 6 ausführlich eingegangen.

Ferner wird dem Block 403 ausgehend von einem Block 107 ein Signal ASF, mit dem angezeigt wird, ob an das Zugfahrzeug ein Anhänger oder Auflieger angekoppelt ist, zugeführt. Auf die konkrete Auswertung des Signals ASF wird im Zusammenhang mit Figur 6 eingegangen.

Gemäß Figur 4 wird mit Hilfe des ersten Ermittlungsmittels 402 die Gierrate omega in Alleinstellung ausgewertet. Entsprechend der Darstellung in Figur 2 ist im zweiten Ausführungsbeispiel auch die Auswertung der aus der Gierrate omega und dem zugehörigen Sollwert omegaSoll gebildeten Differenz omegaDiff denkbar.

In Figur 5 ist der konkrete Aufbau des ersten Ermittlungsmittels 401 dargestellt, mit dem ausgehend von der ihm zugeführten Querbeschleunigung aq die Querdynamikgröße aqAmp und die Störgröße aqStör ermittelt werden, die dem Block 403 zugeführt werden.

Das erste Ermittlungsmittel 401 enthält ein Filtermittel 502, welches insbesondere als Bandpaß ausgebildet ist. Mit dem Filtermittel 502 werden aus der ihm zugeführten Querbeschleunigung aq Anteile aqBP ausgefiltert, die in einem vorbestimmten Frequenzbereich liegen, der für die Pendelbewegung des Fahrzeuges charakteristisch ist. Die ausgefilterten Anteile aqBP werden einem Block 503, einem Block 506 sowie einem Additionsmittel 512 zugeführt.

Block 501 stellt ein Signalerzeugungsmittel dar, mit dem zwei um eine vorgegebene Phase, insbesondere 90°, verschobene Signale $\sin(2\pi f_0 t)$ und $\cos(2\pi f_0 t)$ erzeugt werden. Vorteilhafterweise haben beide Signale die gleiche Amplitude. Das Signal $\sin(2\pi f_0 t)$ wird sowohl einem Block 503 als auch einem Block 505 zugeführt. Das Signal $\cos(2\pi f_0 t)$ wird sowohl einem Block 506 als auch einem Block 508 zugeführt. Bei dem Signalerzeugungsmittel kann es sich entweder um einen in analoger Technik aufgebauten Oszillator oder um einen in digitaler Technik realisierten Oszillator handeln. Der Oszillator läßt sich beispielsweise dann in digitaler Technik realisieren, wenn der im Steuergerät enthaltene Mikrocontroller über einen digitalen Signalprozessor verfügt.

Im Block 503, der von der Funktion her ein Demodulationsmittel darstellt und der konkret als Multipliziermittel bzw. Multiplizierer realisiert ist, wird in Abhängigkeit der ausgefilterten Anteile aqBP und dem Signal $\sin(2\pi f_0 t)$ ein demoduliertes Signal aqBPsin erzeugt. Die durch die Multiplikation entstehenden Anteile des Signals aqBPsin lassen sich über die aus der Mathematik bekannten "Produkte von trigonometrischen Funktionen" herleiten. Im wesentlichen verfügt das Signal aqBPsin über einen Gleichanteil und über einen Anteil bei der, bezogen auf die Frequenz des Signals $\sin(2\pi f_0 t)$, doppelten Frequenz $2f_0$. Das Signal aqBPsin wird ausgehend von dem Block 503 einem nachgeschalteten Filtermittel 504, welches als Tiefpaß realisiert ist, zugeführt. Mit Hilfe des Tiefpasses 504 wird das demodulierte Signal aqBPsin gefiltert, wodurch ein Signal aqsin entsteht, welches dem in dem demodulierten Signal aqBPsin enthaltenen Gleichanteil entspricht.

In entsprechender Weise wird mit den beiden Blöcken 506 und 507 in Abhängigkeit der dem Demodulationsmittel 506 zugeführten ausgefilterten Anteile aqBP und dem Signal $\cos(2\pi f_0 t)$ ein demoduliertes Signal aqBPcos erzeugt, welches mit Hilfe des Filtermittels 507, welches als Tiefpaß realisiert ist, in ein gefiltertes demoduliertes Signal aqcos umgesetzt wird.

Mit Hilfe des Blockes 509 wird in Abhängigkeit der beiden Signale aqcos und aqsin die Amplitudengröße aqAmp ermittelt. Dies erfolgt beispielsweise gemäß der Beziehung

$$aqAmp = \sqrt{aq\sin^2 + aq\cos^2}\ .$$

Mit Hilfe eines Modulationsmittels 505, welches als Multipliziermittel bzw. als Multiplizierer ausgebildet ist, wird in Abhängigkeit des gefilterten demodulierten Signals aqsin und dem Signal $\sin(2\pi f_0 t)$ ein moduliertes Signal aqNutzsin erzeugt. In entsprechender Weise wird mit Hilfe des Modulationsmittels 508 in Abhängigkeit des gefilterten demodulierten Signals aqcos und dem Signal $\cos(2\pi f_0 t)$ ein moduliertes Signal aqNutzcos erzeugt. Die beiden Signale aqNutzsin und aqNutzcos werden einem Additionsmittel 510 zugeführt, welches die Summe aqNutzroh dieser beiden Signale bildet. Die Summe aqNutzroh wird einem dem Additionsmittel 510 nachgeschalteten Bewertungsmittel 511 zugeführt, in dem die Summe aqNutzroh mit dem Faktor 2 bewertet wird. Das dabei entstehende Signal aqNutz wird dem Subtrahiermittel 512 zugeführt. Die Bewertung mit dem Faktor 2 ist deshalb erforderlich, weil durch die Demodulation und die Modulation das Signal aqNutzroh einen Faktor 0,5 aufweist. Um jedoch die Störgröße aqStör berechnen zu können, sollte das Signal (aqNutz), welches hierzu mit den ausgefilterten Anteilen aqBP verglichen wird, von seiten der Amplitude die gleiche Größenordnung aufweisen. Die Größe aqNutz repräsentiert die zu ermittelnde Pendelbewegung des Fahrzeuges, ist jedoch von Störeinflüssen befreit.

Die Größe aqNutz und die ausgefilterten Anteile aqBP werden einem Subtrahiermittel 512 zugeführt, mit dem aus diesen Eingangsgrößen eine Differenz aqStörroh ermittelt wird. Diese Größe aqStörroh wird einem Block 513 zugeführt, mit dem durch Betragsbildung und Filterung, insbesondere durch Filterung mit einem Tiefpaß, die Störgröße aqStör ermittelt wird, die dann dem Block 403 zugeführt wird.

Die vorstehend beschriebenen Blöcke 501, 503, 506, 504, 507 und 509 stellen in der Zusammenschau Mittel dar, mit denen in Abhängigkeit der ausgefilterten Anteile die Amplitudengröße aqAmp ermittelt wird. Die vorstehend beschriebenen Blöcke 505, 508, 510, 511, 512 und 513 stellen in der Zusammenschau Mittel dar, mit denen in Abhängigkeit der ausgefilterten Anteile die Störgröße aqStör ermittelt wird.

In Figur 5 ist die Vorgehensweise für die Ermittlung der Querdynamikgröße in Abhängigkeit der Querbeschleunigung dargestellt. Die Ermittlung der Querdynamikgröße in Abhängigkeit der Gierrate omega oder in Abhängigkeit der aus der Gierrate omega und dem Sollwert omegaSoll für die Gierrate gebildeten Differenz erfolgt in entsprechender Weise.

In Figur 6 ist der Ablauf des dem zweiten Ausführungsbeispiel zugrundeliegenden Verfahrens dargestellt. Das Verfahren beginnt mit einem Schritt 601, an den sich ein Schritt 609 anschließt. Im Schritt 609 wird entsprechend dem Schritt 309 das Signal ASF ausgewertet. Wird festgestellt, daß das Signal ASF den Wert 1 aufweist, so wird anschließend an den Schritt 609 ein Schritt 602, mit dem die eigentliche Erkennung einer Pendelbewegung beginnt, ausgeführt. Wird dagegen festgestellt, daß das Signal ASF nicht den Wert 1 aufweist, so wird erneut der Schritt 609 ausgeführt.

An dieser Stelle sei festgehalten, daß der Schritt 609 optional ist und für die Ausführung der Funktion der Erkennung einer Pendelbewegung nicht zwingend erforderlich ist, weswegen er auch entfallen kann. Entfällt der Schritt 609, so ist auch der in der Figur 4 dargestellte Block 107 nicht erforderlich.

Der sich an den Schritt 609 anschließende Schritt 602 entspricht dem Schritt 302. Anschließend an den Schritt 602 wird ein Schritt 603 ausgeführt. Im Schritt 603 werden folgende drei Einzelabfragen überprüft: Ist das aus der Störgröße aqStör und der Querdynamikgröße aqAmp gebildete Verhältnis größer als ein zugehöriger Schwellenwert S5? Ist das aus der Störgröße omegaStör und der Querdynamikgröße omegaAmp gebildete Verhältnis größer als ein zugehöriger Schwellenwert S6? Ist die Lenkgröße deltaBew größer als ein zugehöriger Schwellenwert S7? Wird im Schritt 603 festgestellt, daß eine der drei Einzelabfragen erfüllt ist, was gleichbedeutend damit ist, daß die vom Fahrer durchgeführten Lenkbewegungen die Erkennung einer Pendelbewegung nicht zulassen bzw. die Durchführung einer Erkennung als nicht erforderlich erscheinen lassen, da beispielsweise eine Slalomfahrt zugrunde liegt, die die Pendelbewegung verursacht oder aber daß die erfaßte Querdynamikgröße nicht auf die eigentlich zu ermittelnde Pendelbewegung zurückgeht, da die Störgröße im Verhältnis zur Querdynamikgröße groß ist, so wird anschließend an den Schritt 603 ein Schritt 607 ausgeführt, in dem der Größe P der Wert 0 zugewiesen wird. Nach dem Schritt 607 wird erneut der Schritt 603 ausgeführt. Wird dagegen im Schritt 603 festgestellt, daß keine der drei Einzelabfragen erfüllt ist, so wird anschließend an den Schritt 603 ein Schritt 604 ausgeführt.

Im Schritt 604 werden entsprechend dem Schritt 304 zwei Teilabfragen ausgeführt. Bei der ersten Teilabfrage werden folgende drei Einzelabfragen überprüft: Ist die Querdynamikgröße aqAmp größer als ein Schwellenwert S8? Ist die Querdynamikgröße omegaAmp größer als ein Schwellenwert S9? Ist die Geschwindigkeitsgröße vf größer als ein Schwellenwert S10? Wenn diese drei Einzelabfragen alle gleichzeitig erfüllt sind, dann ist die erste Teilabfrage erfüllt.

Die zweite Teilabfrage enthält eine Einzelabfrage bzgl. der Größe P, mit der überprüft wird, ob der Größe P der Wert 1 zugewiesen ist. Darüber hinaus enthält die zweite Teilabfrage die drei in der ersten Teilabfrage enthaltenen Einzelabfragen, jedoch entsprechend dem Schritt 304 mit den Schwellenwerten S8*, S9* und S10*, deren Werte jeweils kleiner sind als die der Schwellenwerte S8, S9 und S10. Wenn alle vier Einzelabfragen erfüllt sind, dann ist die zweite Teilabfrage erfüllt.

Wird im Schritt 604 festgestellt, daß eine der beiden Teilabfragen erfüllt ist, was gleichbedeutend damit ist, daß eine Pendelbewegung des Fahrzeuges vorliegt, so wird anschließend an den Schritt 604 ein Schritt 605 ausgeführt, der dem Schritt 305 entspricht. Anschließend an den Schritt 605 wird ein Schritt 606 ausgeführt, der dem Schritt 306 entspricht. Anschließend an den Schritt 606 wird erneut der Schritt 603 ausgeführt. Wird dagegen im Schritt 604 festgestellt, daß keine der beiden Teilabfragen erfüllt ist, so wird anschließend an den Schritt 604 ein Schritt 608 ausgeführt, der dem Schritt 308 entspricht. Anschließend an den Schritt 608 wird erneut der Schritt 603 ausgeführt.

Auch für die im Schritt 604 durchgeführten Einzelabfragen gilt bzgl. deren Verknüpfung das bereits im Zusammenhang mit dem Schritt 304 Ausgeführte.

Abschließend sei bemerkt, daß die in der Beschreibung gewählte Form der Ausführungsbeispiele sowie die in den Figuren gewählte Darstellung keine einschränkende Wirkung auf die erfindungswesentliche Idee haben sollen.

Sollten sich daraus vorteilhafte Ausgestaltungen ergeben, so können einzelnen Komponenten der beiden Ausführungsbeispiele miteinander kombiniert werden.

**Patentansprüche**

1. Vorrichtung zur Erkennung einer Pendelbewegung eines Fahrzeuges,
   die wenigstens ein erstes Ermittlungsmittel (211, 212, 401, 402) enthält, mit dem eine Querdynamikgröße (aqTP, omegaTP, aqAmp, omegaAmp), die die Querdynamik des Fahrzeuges repräsentiert, ermittelt wird,
   die zweite Ermittlungsmittel (103) enthält, mit denen eine Geschwindigkeitsgröße (vf), die die Geschwindigkeit des Fahrzeuges beschreibt, ermittelt wird,
   die dritte Ermittlungsmittel (207, 403) enthält, mit denen in Abhängigkeit der wenigstens einen Querdynamikgröße und der Geschwindigkeitsgröße ermittelt wird, ob eine Pendelbewegung des Fahrzeuges vorliegt,
   wobei hierzu zumindest überprüft wird, ob die wenigstens eine Querdynamikgröße größer als ein zugehöriger Schwellenwert (S2, S2*, S3, S3*, S8, S8*, S9, S9*) und die Geschwindigkeitsgröße größer als ein zugehöriger Schwellenwert (S4, S4*, S10, S10*) ist,
   wobei das wenigstens eine erste Ermittlungsmittel ein erstes Filtermittel (201, 204, 502) enthält, mit dem aus der dem ersten Ermittlungsmittel zur Ermittlung der Querdynamikgröße zugeführten Eingangsgröße (aq, omega, omegaDiff) Anteile (aqBP, omegaBP) ausgefiltert werden, die in einem vorbestimmten Frequenzbereich liegen, und wobei die Querdynamikgröße in Abhängigkeit der ausgefilterten Anteile ermittelt wird.

2. Vorrichtung nach Anspruch 1, **dadurch gekennzeichnet,**
   **daß** die Vorrichtung erste Erfassungsmittel (101), insbesondere einen Querbeschleunigungssensor, zur Erfassung der auf das Fahrzeug wirkenden Querbeschleunigung (aq) enthält, und daß mit einem der ersten Ermittlungsmittel eine der Querdynamikgrößen in Abhängigkeit der Querbeschleunigung des Fahrzeuges ermittelt wird, und/oder
   **daß** die Vorrichtung zweite Erfassungsmittel (102), insbesondere einen Gierratensensor, zur Erfassung der Gierrate (omega) des Fahrzeuges enthält, und
   **daß** mit einem der ersten Ermittlungsmittel eine der Querdynamikgrößen in Abhängigkeit der Gierrate des Fahrzeuges ermittelt wird,
   insbesondere enthält die Vorrichtung genau zwei erste Ermittlungsmittel, je eines für die ersten Erfassungsmittel und eines für die zweiten Erfassungsmittel.

3. Vorrichtung nach Anspruch 1, **dadurch gekennzeichnet, daß** die Vorrichtung vierte Ermittlungsmittel (213) enthält, mit denen eine Lenkgröße (delta-Bew), die die vom Fahrer durchgeführte Lenkbewegung repräsentiert, ermittelt wird,

wobei die Lenkgröße, insbesondere unter Verwendung eines Integriermittels (213c), in Abhängigkeit der vom Fahrer über einen vorbestimmten Zeitraum hinweg eingestellten Lenkwinkel ermittelt wird, allerdings bleiben hierbei kleine Lenkwinkel, insbesondere werden diese durch Verwendung eines Ausblendmittels (213a) mit geeignet gewählter Totzone ausgeblendet, und/oder sich aus zeitlich langsam verlaufenden Lenkwinkeländerungen ergebende Lenkwinkel, insbesondere werden diese durch Verwendung eines Hochpaßfilters (213b) ausgefiltert, unberücksichtigt, und

daß die in den dritten Ermittlungsmitteln stattfindende Ermittlung ferner in Abhängigkeit der Lenkgröße durchgeführt wird, insbesondere wird die Erkennung der Pendelbewegung dann nicht ausgeführt, wenn der Wert der Lenkgröße größer als ein zugehöriger Schwellenwert (S1, S7) ist.

4. Vorrichtung nach Anspruch 1, **dadurch gekennzeichnet,**

**daß** der Wert des zu der wenigstens einen Querdynamikgröße zugehörigen Schwellenwertes und/oder der Wert des zu der Geschwindigkeitsgröße zugehörigen Schwellenwertes abhängig davon ist, ob eine Pendelbewegung erkannt wurde,

insbesondere ist, wenn eine Pendelbewegung erkannt wurde, der verwendete Wert (S2*, S3*, S4*, S8*, S9*, S10*) kleiner als der Wert (S2, S3, S4, S8, S9, S10), der verwendet wird, solange noch keine Pendelbewegung erkannt wurde.

5. Vorrichtung nach Anspruch 2, **dadurch gekennzeichnet,**

**daß** die Vorrichtung Mittel (210) enthält, mit denen eine Differenz (omegaDiff) zwischen einem Sollwert (omegaSoll) für die Gierrate und der Gierrate des Fahrzeuges ermittelt wird, und

**daß** eine der Querdynamikgrößen in Abhängigkeit dieser Differenz ermittelt wird.

6. Vorrichtung nach Anspruch 1, **dadurch gekennzeichnet,**

**daß** die Vorrichtung Mittel zur Beeinflussung des vom Motor abgegebenen Moments und/oder den Rädern des Fahrzeuges zugeordnete Bremsen enthält, und

**daß** bei einer erkannten Pendelbewegung des Fahrzeuges die Mittel zur Beeinflussung des vom Motor abgegebenen Moments und die den Rädern des Fahrzeuges zugeordneten Bremsen im Sinne einer Reduzierung der Fahrzeuggeschwindigkeit angesteuert werden, insbesondere werden die Bremsen hierbei gleichmäßig angesteuert, und/oder

**daß** bei einer erkannten Pendelbewegung des Fahrzeuges die den Rädern des Fahrzeuges zugeordneten Bremsen individuell so angesteuert werden, daß **dadurch** ein auf das Fahrzeug wirkendes Giermoment erzeugt wird, welches der Pendelbewegung entgegenwirkt.

7. Vorrichtung nach Anspruch 1, **dadurch gekennzeichnet,**

**daß** die Vorrichtung zur Erkennung einer Pendelbewegung eines Fahrzeuges im Rahmen einer Vorrichtung zur Regelung einer die Fahrdynamik des Fahrzeuges beschreibenden Größe, insbesondere einer die Gierrate des Fahrzeuges beschreibenden Größe, eingesetzt wird.

8. Vorrichtung nach Anspruch 1, **dadurch gekennzeichnet,**

**daß** das wenigstens eine erste Ermittlungsmittel Mittel (203, 206) zur Bildung eines Mittelwertes, insbesondere einen Tiefpaß, enthält, und daß die Querdynamikgröße in Abhängigkeit der ausgefilterten Anteile durch Mittelwertbildung ermittelt wird,

insbesondere enthält das wenigstens eine erste Ermittlungsmittel ferner ein Betragsbildungsmittel (202, 205), mit dem vor Bildung des Mittelwertes die Beträge (aqAbs, omegaAbs) der ausgefilterten Anteile ermittelt werden.

9. Vorrichtung nach Anspruch 1, **dadurch gekennzeichnet,**

**daß** das wenigstens eine erste Ermittlungsmittel (401, 402) erste Mittel (501, 503, 506, 504, 507, 509) enthält, mit denen in Abhängigkeit der ausgefilterten Anteile eine Amplitudengröße (aqAmp, omegaAmp) ermittelt wird, die die Amplitude der dem ersten Ermittlungsmittel zugeführten Eingangsgröße repräsentiert, wobei diese Amplitudengröße der Querdynamikgröße entspricht, und/oder

**daß** das wenigstens eine erste Ermittlungsmittel zweite Mittel (505, 508, 510, 511, 512, 513) enthält, mit denen in Abhängigkeit der ausgefilterten Anteile eine Störgröße (aqStör, omegaStör) ermittelt wird, die die Anteile der dem ersten Ermittlungsmittel zugeführten Eingangsgröße repräsentiert, die in dieser Eingangsgröße enthalten sind, jedoch unabhängig von der zu ermittelnden Pendelbewegung des Fahrzeuges sind, und

**daß** die in den dritten Ermittlungsmitteln stattfindende Ermittlung ferner in Abhängigkeit dieser Störgröße durchgeführt wird.

10. Vorrichtung nach Anspruch 9, **dadurch gekennzeichnet,**

**daß** die Erkennung der Pendelbewegung dann nicht durchgeführt wird, wenn ein aus der Störgröße und der Amplitudengröße gebildetes Verhältnis größer als ein zugehöriger Schwellenwert (S5, S6) ist.

**11.** Vorrichtung nach Anspruch 9, **dadurch gekennzeichnet,**
**daß** die ersten Mittel Signalerzeugungsmittel (501) enthalten, mit denen zwei um eine vorgegebene Phase, insbesondere 90°, verschobene Signale (sin $(2\pi f_0 t)$, cos$(2\pi f_0 t)$), insbesondere mit gleicher Amplitude, erzeugt werden, und
**daß** die ersten Mittel Demodulationsmittel (503, 506), insbesondere Multipliziermittel, enthalten, mit denen in Abhängigkeit der ausgefilterten Anteile und der beiden mit den Signalerzeugungsmitteln erzeugten Signalen zwei demodulierte Signale (aqBPsin, aqBPcos) erzeugt werden, und
**daß** die ersten Mittel Filtermittel (504, 507), insbesondere Tiefpässe, enthalten, mit denen die demodulierten Signale gefiltert werden, wobei in Abhängigkeit der gefilterten demodulierten Signale (aqsin, aqcos) die Amplitudengröße ermittelt wird, und/oder
**daß** die zweiten Mittel Modulationsmittel (505, 508), insbesondere Multipliziermittel, enthalten, mit denen in Abhängigkeit der beiden gefilterten demodulierten Signale und den beiden mit den Signalerzeugungsmitteln erzeugten Signalen zwei modulierte Signale (aqNutzsin, aqNutzcos) erzeugt werden, die einem Additionsmittel (510) mit nachgeordnetem Bewertungsmittel (511) zugeführt werden, wobei mit dem Additionsmittel und dem Bewertungsmittel eine Größe (aqNutz) ermittelt wird, die die zu ermittelnde Pendelbewegung des Fahrzeuges repräsentiert, jedoch von Störeinflüssen befreit ist, und
**daß** die zweiten Mittel ein Subtrahiermittel (512) enthalten, mit dem in Abhängigkeit der ausgefilterten Anteile und der Größe, die die zu ermittelnde Pendelbewegung des Fahrzeuges repräsentiert, jedoch von Störeinflüssen befreit ist, eine Größe (aqStörroh) ermittelt wird, aus der durch Betragsbildung und Filterung, insbesondere unter Verwendung eines Tiefpaßfilters, die Störgröße ermittelt wird.

**12.** Vorrichtung nach Anspruch 1, **dadurch gekennzeichnet,**
**daß** es sich bei dem Fahrzeug um ein Fahrzeuggespann handelt, welches aus einem Zugfahrzeug und einem Anhänger oder Auflieger besteht, und
**daß** mit der Vorrichtung ein Pendeln des Anhängers oder Aufliegers erkannt wird,
insbesondere sind sämtliche für die Erkennung des Pendelns erforderlichen Erfassungsmittel und/oder Sensormittel dem Zugfahrzeug zugeordnet.

**13.** Vorrichtung nach Anspruch 12, **dadurch gekennzeichnet, daß** die Vorrichtung Mittel (107) enthält, mit denen ermittelt wird, ob an das Zugfahrzeug ein Anhänger oder Auflieger angekoppelt ist, wobei die Erkennung einer Pendelbewegung dann durchgeführt wird, wenn an das Zugfahrzeug ein Anhänger oder Auflieger angekoppelt ist.

**14.** Vorrichtung nach Anspruch 13, **dadurch gekennzeichnet, daß** die Ermittlung, ob an das Zugfahrzeug ein Anhänger oder Auflieger angekoppelt ist, durch Überprüfung eines elektrischen Kontaktes erfolgt.

**15.** Vorrichtung nach Anspruch 1, **dadurch gekennzeichnet, dass** eine Pendelbewegung des Fahrzeuges dann vorliegt, wenn die wenigstens eine Querdynamikgröße größer als der zugehörige Schwellenwert ist, und wenn die Geschwindigkeitsgröße größer als der zugehörige Schwellenwert ist,

**16.** Vorrichtung nach Anspruch 1, **dadurch gekennzeichnet, dass** es sich bei dem ersten Filtermittel (201, 204, 502) um einen Bandpass handelt.

**17.** Vorrichtung nach Anspruch 1, **dadurch gekennzeichnet, dass** aus der dem ersten Ermittlungsmittel zur Ermittlung der Querdynamikgröße zugeführten Eingangsgröße (aq, omega, omegaDiff) Anteile (aqBP, omegaBP) ausgefiltert werden, die in einem vorbestimmten, für die Pendelbewegung des Fahrzeuges charakteristischen Frequenzbereich, liegen

**18.** Verfahren zur Erkennung einer Pendelbewegung eines Fahrzeuges,
bei dem eine Querdynamikgröße (aqTP, omegaTP, aqAmp, omegaAmp), die die Querdynamik des Fahrzeuges repräsentiert, ermittelt wird,
bei dem eine Geschwindigkeitsgröße (vf), die die Geschwindigkeit des Fahrzeuges beschreibt, ermittelt wird,
bei dem in Abhängigkeit der wenigstens einen Querdynamikgröße und der Geschwindigkeitsgröße ermittelt wird, ob eine Pendelbewegung des Fahrzeuges vorliegt,
wobei hierzu zumindest überprüft wird, ob die wenigstens eine Querdynamikgröße größer als ein zugehöriger Schwellenwert (S2, S2*, S3, S3*, S8, S8*, S9, S9*) und die Geschwindigkeitsgröße größer als ein zugehöriger Schwellenwert (S4, S4*, S10, S10*) ist,
wobei das wenigstens eine erste Ermittlungsmittel ein erstes Filtermittel (201, 204, 502) enthält, mit dem aus der dem ersten Ermittlungsmittel zur Ermittlung der Querdynamikgröße zugeführten Eingangsgröße (aq, omega, omegaDiff) Anteile (aqBP, omegaBP) ausgefiltert werden, die in einem vorbestimmten Frequenzbereich liegen, und
bei dem die Querdynamikgröße in Abhängigkeit der ausgefilterten Anteile ermittelt wird.

## Claims

1. Device for detecting an oscillating movement of a vehicle,

   which device contains a first determining means (211, 212, 401, 402), by means of which a lateral-dynamic variable (aqTP, omegaTP, aqAmp, omegaAmp) is determined which represents the lateral dynamics of the vehicle,

   which device contains second determining means (103), by means of which a speed variable (vf) is determined which describes the speed of the vehicle,

   which device contains third determining means (207, 403), by means of which it is determined, as a function of the at least one lateral-dynamic variable and the speed variable, whether an oscillating movement of the vehicle is present,

   it being checked for this purpose at least whether the at least one lateral-dynamic variable is greater than an associated threshold value (S2, S2*, S3, S3*, S8, S8*, S9, S9*) and whether the speed variable is greater than an associated threshold value (S4, S4*, S10, S10*),

   the at least one first determining means containing a first filter means (201, 204, 502), by means of which components (aqBP, omegaBP) which lie in a predefined frequency range are filtered out of the input variable (aq, omega, omegaDiff) supplied to the first determining means for determining the lateral-dynamic variable, and

   the lateral-dynamic variable being determined as a function of the filtered-out components.

2. Device according to Claim 1, **characterized in that** the device contains first detecting means (101), in particular a lateral acceleration sensor, for detecting the lateral acceleration (aq) acting on the vehicle, and

   **in that** one of the lateral-dynamic variables is determined by one of the first determining means as a function of the lateral acceleration of the vehicle, and/or

   **in that** the device contains second detecting means (102), in particular a yaw rate sensor, for detecting the yaw rate (omega) of the vehicle, and

   **in that** one of the lateral-dynamic variables is determined by one of the first determining means as a function of the yaw rate of the vehicle,

   in particular, the device contains precisely two first determining means, one for the first detecting means and one for the second detecting means respectively.

3. Device according to Claim 1, **characterized in that** the device contains fourth determining means (213), by means of which a steering variable (delta-Bew) is determined which represents the steering movement performed by the driver,

   the steering variable being determined, in particular using an integration means (213c), as a function of the steering angle which is input by the driver over a predefined period of time, although small steering angles, which are in particular suppressed using a suppression means (213a) with a suitable dead zone, and/or steering angles resulting from steering angle changes which occur slowly with time, which steering angles are in particular filtered out using a high-pass filter (213b), remain neglected here, and

   **in that** the determination which takes place in the third determining means is additionally carried out as a function of the steering variable, in particular, the detection of the oscillating movement is not carried out when the value of the steering variable is greater than an associated threshold value (S1, S7).

4. Device according to Claim 1, **characterized in that** the value of the threshold value associated with the at least one lateral-dynamic variable and/or the value of the threshold value associated with the speed variable is dependent on whether an oscillating movement has been detected,

   in particular, the value (S2*, S3*, S4*, S8*, S9*, S10*) which is used if an oscillating movement has been detected is smaller than the value (S2, S3, S4, S8, S9, S10) which is used as long as no oscillating movement has yet been detected.

5. Device according to Claim 2, **characterized in that** the device contains means (210), by means of which a difference (omegaDiff) is determined between a nominal value (omegaSoll) for the yaw rate and the yaw rate of the vehicle, and

   **in that** one of the lateral-dynamic variables is determined as a function of said difference.

6. Device according to Claim 1, **characterized in that** the device contains means for influencing the torque output by the engine and/or brakes assigned to the wheels of the vehicle, and

   **in that** when an oscillating movement of the vehicle is detected, the means for influencing the torque output by the engine and the brakes assigned to the wheels of the vehicle are actuated in order to reduce the vehicle speed, in particular, the brakes are actuated uniformly here, and/or

   **in that** when an oscillating movement of the vehicle is detected, the brakes assigned to the wheels of the vehicle are actuated individually in such a way that a yaw moment which acts on the vehicle is generated as a result, said yaw moment counteracting the oscillating movement.

7. Device according to Claim 1, **characterized in that** the device for detecting an oscillating movement of a vehicle is used in the context of a device for the closed-loop control of a variable which describes the driving dynamics of the vehicle, in particular a variable which describes the yaw rate of the vehicle.

8. Device according to Claim 1, **characterized in that** the at least one first determining means contains means (203, 206) for forming a mean value, in particular a low-pass filter, and in that the lateral-dynamic variable is determined as a function of the filtered-out components by means of mean value formation,
   in particular, the at least one first determining means additionally contains a magnitude formation means (202, 205), by means of which the magnitudes (aqAbs, omegaAbs) of the filtered-out components are determined prior to formation of the mean value.

9. Device according to Claim 1, **characterized in that** the at least one first determining means (401, 402) contains first means (501, 503, 506, 504, 507, 509), by means of which an amplitude variable (aqAmp, omegaAmp), which represents the amplitude of the input variable supplied to the first determining means, is determined as a function of the filtered-out components, said amplitude variable corresponding to the lateral-dynamic variable, and/or
   **in that** the at least one first determining means contains second means (505, 508, 510, 511, 512, 513), by means of which a disturbance variable (aqStör, omegaStör) is determined as a function of the filtered-out components, which disturbance variable (aqStör, omegaStör) represents the components of the input variable supplied to the first determining means, said components being contained in said input variable but being independent of the vehicle oscillating movement which is to be determined, and
   **in that** the determination which takes place in the third determining means is additionally carried out as a function of said disturbance variable.

10. Device according to Claim 9, **characterized in that** the detection of the oscillating movement is not carried out when a ratio formed from the disturbance variable and the amplitude variable is greater than an associated threshold value (S5, S6).

11. Device according to Claim 9, **characterized in that** the first means contain signal formation means (501), by means of which two signals (sin $(2\pi f_0 t)$, cos$(2\pi f_0 t)$) are formed which are offset by a predefined phase, in particular 90°, and in particular have the same amplitude, and
    **in that** the first means contain demodulation means (503, 506), in particular multiplication means, by means of which two demodulated signals (aqBPsin, aqBPcos) are formed as a function of the filtered-out components and as a function of the two signals formed by the signal formation means, and

**in that** the first means contain filter means (504, 507), in particular low-pass filters, by means of which the demodulated signals are filtered, the amplitude variable being determined as a function of the filtered demodulated signals (aqsin, aqcos), and/or
**in that** the second means contain modulation means (505, 508), in particular multiplication means, by means of which two modulated signals (aqNutzsin, aqNutzcos) are formed as a function of the two filtered demodulated signals and as a function of the two signals formed by the signal formation means, which two modulated signals (aqNutzsin, aqNutzcos) are supplied to an addition means (510) which has an evaluation means (511) connected downstream, a variable (aqNutz) being determined by the addition means and the evaluation means, said variable representing the vehicle oscillating movement to be determined but having had disturbance influences removed from it, and
**in that** the second means contain a subtraction means (512), by means of which a variable (aqStörroh) is determined as a function of the filtered-out components and as a function of the variable which represents the vehicle oscillating movement to be determined but has had disturbance influences removed from it, from which variable (aqStörroh) the disturbance variable is determined by magnitude formation and filtering, in particular using a low-pass filter.

12. Device according to Claim 1, **characterized in that** the vehicle is a vehicle combination which consists of a towing vehicle and a trailer or semi-trailer, and
    **in that** an oscillating movement of the trailer or semi-trailer is detected by means of the device,
    in particular, all the detecting means and/or sensor means required for detecting the oscillation are assigned to the towing vehicle.

13. Device according to Claim 12, **characterized in that** the device contains means (107), by means of which it is determined whether a trailer or semi-trailer is coupled to the towing vehicle, the detection of an oscillating movement being carried out when a trailer or semi-trailer is coupled to the towing vehicle.

14. Device according to Claim 13, **characterized in that** the determination of whether a trailer or semi-trailer is coupled to the towing vehicle is carried out by checking an electrical contact.

15. Device according to Claim 1, **characterized in that** an oscillating movement of the vehicle is present when the at least one lateral-dynamic variable is greater than the associated threshold value, and when the speed variable is greater than the associated threshold value.

**16.** Device according to Claim 1, **characterized in that** the first filter means (201, 204, 502) is a band-pass filter.

**17.** Device according to Claim 1, **characterized in that** components (aqBP, omegaBP) which lie in a predefined frequency range are filtered out of the input variable (aq, omega, omegaDiff) supplied to the first determining means for determining the lateral-dynamic variable, said frequency range being characteristic of the oscillating movement of the vehicle.

**18.** Method for detecting an oscillating movement of a vehicle,

in which a lateral-dynamic variable (aqTP, omegaTP, aqAmp, omegaAmp) is determined which represents the lateral dynamics of the vehicle,

in which a speed variable (vf) is determined which describes the speed of the vehicle,

in which it is determined, as a function of the at least one lateral-dynamic variable and the speed variable, whether an oscillating movement of the vehicle is present,

it being checked for this purpose at least whether the at least one lateral-dynamic variable is greater than an associated threshold value (S2, S2*, S3, S3*, S8, S8*, S9, S9*) and whether the speed variable is greater than an associated threshold value (S4, S4*, S10, S10*),

the at least one first determining means containing a first filter means (201, 204, 502), by means of which components (aqBP, omegaBP) which lie in a predefined frequency range are filtered out of the input variable (aq, omega, omegaDiff) supplied to the first determining means for determining the lateral-dynamic variable, and

in which the lateral-dynamic variable is determined as a function of the filtered-out components.

**Revendications**

**1.** Dispositif de reconnaissance d'un mouvement pendulaire d'un véhicule, comprenant :

- au moins un premier moyen de détermination (211, 212, 401, 402) qui permet de déterminer une grandeur de dynamique transversale (aqTP, omegaTP, aqAmp, omegaAmp) représentant la dynamique transversale du véhicule,
- des deuxièmes moyens de détermination (103) qui permettent de déterminer une grandeur de vitesse (vf) décrivant la vitesse du véhicule,
- des troisièmes moyens de détermination (207, 403) qui permettent de déterminer, en fonction d'au moins une grandeur de dynamique transversale et de la grandeur de vitesse, si on est en présence d'un mouvement pendulaire du véhicule,

dans lequel on vérifie à cet effet au moins si l'au moins une grandeur de dynamique transversale est supérieure à une valeur de seuil correspondante (S2, S2*, S3, S3*, S8, S8*, S9, S9*) et si la grandeur de vitesse est supérieure à une valeur de seuil correspondante (S4, S4*, S10, S10*),

le premier moyen de détermination comprend un premier moyen filtrant (201, 204, 502) qui permet de filtrer, à partir de la grandeur d'entrée (aq, omega, omegaDiff) amenée au premier moyen de détermination destiné à déterminer la grandeur de dynamique transversale, des portions (aqBP, omegaBP) se trouvant dans une gamme de fréquences prédéfinie, et

la grandeur de dynamique transversale est déterminée en fonction des portions filtrées.

**2.** Dispositif selon la revendication 1, **caractérisé en ce que**

le dispositif comprend des premiers moyens de détection (101), en particulier un capteur d'accélération transversale, pour détecter l'accélération transversale (aq) agissant sur le véhicule, et

une des grandeurs de dynamique transversale est déterminée par un des premiers moyens de détermination en fonction de l'accélération transversale du véhicule, et/ou

le dispositif comprend des deuxièmes moyens de détection (102), en particulier un capteur de lacets, pour détecter les taux de lacet (omega) du véhicule, et

une des grandeurs de dynamique transversale est déterminée par un des premiers moyens de détermination en fonction des taux de lacet du véhicule,

le dispositif comprenant en particulier précisément deux premiers moyens de détermination, à chaque fois un pour les premiers moyens de détection et un pour les deuxièmes moyens de détection.

**3.** Dispositif selon la revendication 1, **caractérisé en ce que**

le dispositif comprend des quatrièmes moyens de détermination (213) qui permettent de déterminer une grandeur de direction (deltaBew) représentant le mouvement de direction réalisé par le conducteur, la grandeur de direction étant déterminée, en particulier en utilisant un moyen d'intégration (213c), en fonction de l'angle de braquage réglé par le conducteur sur une durée prédéfinie, mais on ne tient pas compte pour cela des petits angles de braquage, ceux-ci étant en particulier fondus en utilisant un moyen de coupure (213a) ayant une zone morte choisie de manière appropriée, et/ou des angles de braquage résultant de modifications lentes dans le temps des angles de braquage, ceux-ci étant en particulier filtrés en utilisant un filtre passe-haut (213b), et

la détermination effectuée dans les troisièmes moyens de détermination est en outre réalisée en fonction de la grandeur de direction, la détermination du mouvement pendulaire n'étant en particulier pas réalisée lorsque la valeur de la grandeur de direction est supérieure à une valeur de seuil correspondante (S1, S7).

4. Dispositif selon la revendication 1,
   **caractérisé en ce que**
   la valeur du seuil correspondant au moins à une grandeur de dynamique transversale et/ou la valeur du seuil correspondant à la grandeur de vitesse est dépendante du fait qu'un mouvement pendulaire a été reconnu,
   et en particulier lorsqu'un mouvement pendulaire a été reconnu, la valeur utilisée (S2*, S3*, S4*, S8*, S9*, S10*) est inférieure à la valeur (S2, S3, S4, S8, S9, S10) utilisée dans la mesure où aucun autre mouvement pendulaire n'a été reconnu.

5. Dispositif selon la revendication 2,
   **caractérisé en ce que**
   le dispositif comprend des moyens (210) qui permettent de déterminer une différence (omegaDiff) entre les taux de lacet du véhicule et une valeur de consigne (omegaSoll) pour les taux de lacet, et une des grandeurs de dynamique transversale est déterminée en fonction de cette différence.

6. Dispositif selon la revendication 1,
   **caractérisé en ce que**
   le dispositif comprend des moyens destinés à influencer le couple généré par le moteur et/ou les freins associés aux roues du véhicule, et
   dans le cas où un mouvement pendulaire du véhicule a été reconnu, les moyens destinés à influencer le couple généré par le moteur et les freins associés aux roues du véhicule sont commandés dans le sens d'une réduction de la vitesse du véhicule, les freins étant en particulier commandés à cet effet de manière uniforme, et/ou
   dans le cas où un mouvement pendulaire du véhicule a été reconnu, les freins associés aux roues du véhicule sont commandés de manière individuelle pour produire un couple de lacet contraire au mouvement pendulaire pour agir sur le véhicule.

7. Dispositif selon la revendication 1,
   **caractérisé en ce que**
   le dispositif de reconnaissance d'un mouvement pendulaire d'un véhicule est utilisé dans le cadre d'un dispositif de régulation d'une grandeur décrivant la dynamique de roulage du véhicule, en particulier une grandeur décrivant le taux de lacet du véhicule.

8. Dispositif selon la revendication 1,
   **caractérisé en ce qu'**
   au moins un premier moyen de détermination (203, 206) comprend en particulier un filtre passe-bas pour former une valeur moyenne, et la grandeur de dynamique transversale est déterminée en fonction des portions filtrées par la formation de la valeur moyenne,
   au moins un premier moyen de détermination comprend en outre un moyen de formation d'amplitudes (202, 205) qui permet de déterminer, avant la formation de la valeur moyenne, les amplitudes (aqAbs, omegaAbs) des portions filtrées.

9. Dispositif selon la revendication 1,
   **caractérisé en ce qu'**
   au moins un premier moyen de détermination (401, 402) comprend des premiers moyens (501, 503, 506, 504, 509) qui permettent de déterminer, en fonction des portions filtrées, une grandeur d'amplitude (aqAmp, omegaAmp) représentant l'amplitude de la grandeur d'entrée amenée au premier moyen de détermination, cette grandeur d'amplitude correspondant à la grandeur de dynamique transversale, et/ ou
   au moins un premier moyen de détermination comprend des deuxièmes moyens (505, 508, 510, 511, 512, 513) qui permettent de déterminer, en fonction des portions filtrées, une grandeur de perturbation (aqStör, omegaStör) représentant les portions de la grandeur d'entrée amenée au premier moyen de détermination qui sont contenues dans cette grandeur d'entrée mais sont indépendantes du mouvement pendulaire du véhicule à déterminer, et
   la détermination effectuée dans les troisièmes moyens de détermination est réalisée en outre en fonction de cette grandeur de perturbation.

10. Dispositif selon la revendication 9,
    **caractérisé en ce que**
    la détermination du mouvement pendulaire n'est réalisée que lorsqu'un rapport formé par la grandeur de perturbation et la grandeur d'amplitude est supérieur à une valeur de seuil correspondante (S5, S6).

11. Dispositif selon la revendication 9,
    **caractérisé en ce que**
    les premiers moyens comprennent des moyens de production de signaux (501) qui permettent de produire deux signaux ($\sin(2\pi f_0 t)$, $\cos(2\pi f_0 t)$) décalés d'une phase prédéterminée, en particulier à 90°, et en particulier de même amplitude, et
    les premiers moyens comprennent des moyens de démodulation (503, 506), en particulier des moyens de multiplication, qui permettent de produire, en fonction des portions filtrées et des deux signaux produits par les moyens de production de signaux, deux signaux démodulés (aqBPsin, aqBPcos), et les premiers moyens comprennent des moyens filtrants (504, 507), en particulier des filtres passe-bas, qui permettent de filtrer les signaux démodulés, la grandeur d'amplitude étant déterminée en fonction des signaux démodulés filtrés (aqsin, aqcos), et/ou les deuxièmes moyens comprennent des moyens de démodulation (505, 508), en particulier des moyens de multiplication, qui permettent de produire, en fonction des deux signaux démodulés filtrés et des deux signaux produits par les moyens de production de signaux, deux signaux modulés (aqNutzsin, aqNutzcos), qui sont amenés à un moyen d'addition (510) à l'aide d'un moyen de pondération raccordé en aval (511), et une grandeur (aqNutz), représentant le mouvement pendulaire du véhicule à déterminer, étant déterminée par les moyens d'addition et le moyen de pondération mais exempte d'influences perturbatrices, et les deuxièmes moyens comprennent un moyen de soustraction (512) qui permet de déterminer, en fonction des portions filtrées et de la grandeur représentant le mouvement pendulaire du véhicule à déterminer, mais exempte d'influences perturbatrices, une grandeur (aqStörroh) à partir de laquelle est déterminée la grandeur de perturbation par une formation d'amplitude et un filtrage, en particulier en utilisant un filtre passe-bas.

**12.** Dispositif selon la revendication 1, **caractérisé en ce que** le véhicule a un attelage de véhicule et comprend un véhicule tracteur et une remorque ou semi-remorque, et avec le dispositif, on reconnaît un mouvement pendulaire de la remorque ou semi-remorque, tous les moyens de détection et/ou moyens de capteurs nécessaires à la reconnaissance du mouvement pendulaire étant associés au véhicule tracteur.

**13.** Dispositif selon la revendication 12, **caractérisé en ce que** le dispositif comprend des moyens (107) qui permettent de déterminer si une remorque ou semi-remorque est accouplée au véhicule tracteur, la reconnaissance d'un mouvement pendulaire étant alors réalisée lorsqu'une remorque ou semi-remorque est accouplée au véhicule tracteur.

**14.** Dispositif selon la revendication 13, **caractérisé en ce que** pour déterminer si une remorque ou semi-remorque est accouplée au véhicule tracteur, on vérifie s'il y a un contact électrique.

**15.** Dispositif selon la revendication 1, **caractérisé en ce qu'**

on est en présence d'un mouvement pendulaire du véhicule lorsqu'au moins une grandeur de dynamique transversale est supérieure à la valeur de seuil correspondante et lorsque la grandeur de vitesse est supérieure à la valeur de seuil correspondante.

**16.** Dispositif selon la revendication 1, **caractérisé en ce que** le premier moyen filtrant (201, 204, 502) est un filtre passe-bande.

**17.** Dispositif selon la revendication 1, **caractérisé en ce que**, à partir de la grandeur d'entrée (aq, omega, omegaDiff) amenée au premier moyen de détermination destiné à déterminer la grandeur de dynamique transversale, des proportions se trouvant dans une gamme de fréquences prédéfinie, caractéristique du mouvement pendulaire du véhicule, sont filtrées.

**18.** Procédé de reconnaissance d'un mouvement pendulaire d'un véhicule, selon lequel

- on détermine une grandeur de dynamique transversale (aqTP, omegaTP, aqAmp, omegaAmp) représentant la dynamique transversale du véhicule,
- on détermine une grandeur de vitesse (vf) décrivant la vitesse du véhicule,
- on détermine, en fonction d'au moins une grandeur de dynamique transversale et de la grandeur de vitesse, si on est en présence d'un mouvement pendulaire du véhicule,
- on vérifie à cet effet au moins si l'au moins une grandeur de dynamique transversale est supérieure à une valeur de seuil correspondante (S2, S2*, S3, S3*, S8, S8*, S9, S9*) et si la grandeur de vitesse est supérieure à une valeur de seuil correspondante (S4, S4*, S10, S10*), et
- le premier moyen de détermination comprend un premier moyen filtrant (201, 204, 502) qui permet de filtrer, à partir de la grandeur d'entrée (aq, omega, omegaDiff) amenée au premier moyen de détermination destiné à déterminer la grandeur de dynamique transversale, des portions (aqBP, omegaBP) qui se trouvent dans une gamme de fréquences prédéfinie, et
- la grandeur de dynamique transversale est déterminée en fonction des portions filtrées.

EP 1 107 894 B1

Fig. 1

19

Fig. 2

## Fig. 3

Start — 301

ASF = 1 — 309    nein

ja

P = 0 — 302

deltaBew > S1 — 303

P = 0 — 307    ja

nein

[aqTP > S2 und
omegaTP > S3 und
vf > S4]
oder
[P = 1 und
(aqTP > S2* und
omegaTP > S3* und
vf > S4*)] — 304

P = 0 — 308    nein

ja

P = 1 — 305

Bremseneingriffe
und/oder
Motoreingriffe — 306

Fig. 4

EP 1 107 894 B1

Fig. 5

Start — 601

nein

ASF = 1

609

ja

P = 0 — 602

$$\frac{aqStör}{aqAmp} > S5$$

oder

$$\frac{omegaStör}{omegaAmp} > S6$$

oder
deltabew > S7

603

ja

P = 0

607

nein

[aqAmp > S8 und
omegaAmp > S9 und
vf > S10]
oder
[P = 1 und
(aqAmp > S8* und
omegaAmp > S9* und
vf > S10*)]

604

nein

P = 0

608

ja

P = 1 — 605

Bremseneingriffe
und/oder
Motoreingriffe — 606

Fig. 6